(19) Europäisches Patentamt / European Patent Office / Office européen des brevets

(11) **EP 3 875 491 A2**

(12) **EUROPEAN PATENT APPLICATION**

(43) Date of publication:
08.09.2021  Bulletin 2021/36

(51) Int Cl.:
*C08F 2/38* (2006.01)    *C08L 95/00* (2006.01)

(21) Application number: 21159935.2

(22) Date of filing: 01.03.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 03.03.2020  JP 2020035822
14.01.2021  JP 2021004250

(71) Applicant: **Asahi Kasei Kabushiki Kaisha Tokyo 1000006 (JP)**

(72) Inventors:
• **HATA, Yukinaga**
**Tokyo, 1000006 (JP)**
• **SHIROMOTO, Takayuki**
**Tokyo, 1000006 (JP)**
• **SUZUKI, Takuya**
**Tokyo, 1000006 (JP)**
• **KAMEDA, Ippei**
**Tokyo, 1000006 (JP)**

(74) Representative: **Strehl Schübel-Hopf & Partner Maximilianstrasse 54 80538 München (DE)**

(54) **BLOCK COPOLYMER, ASPHALT COMPOSITION, AND MODIFIED ASPHALT MIXTURE**

(57)    [Problem to be Solved]

Provided is a block copolymer used for an asphalt composition excellent in high softening point properties, high elongation properties, heat resistance stability, elongation recovery, compatibility, and high swelling rate properties.

[Solution]

A block copolymer (P) containing:

a polymer block (a) mainly containing a vinyl aromatic monomer unit; and

a polymer block (b) containing a conjugated diene monomer unit and a vinyl aromatic monomer unit,

wherein the block copolymer (P) has the following characteristics (1) to (6):

(1) a mass proportion TS of the vinyl aromatic monomer unit is 20 to 45% by mass;

(2) a mass proportion BS of the (a) is 15 to 35% by mass;

(3) a 5% by mass toluene solution viscosity is 5 to 40 mPa·s;

(4) a nitrogen content is 20 to 1000 ppm;

(5) the block copolymer (P) contains a block copolymer (C) having a structure containing two or more of the (a), and a mass proportion of the (C) is 50 to 100% by mass;

(6) a mass proportion (RS) of the vinyl aromatic monomer unit in the polymer block (b) according to the following formula is 3 to 23% by mass

$$RS = (TS - BS)/(100 - BS) \times 100 \ ... \ (II).$$

(ii).

EP 3 875 491 A2

**Description**

[Technical Field]

The present invention relates to a block copolymer, an asphalt composition, and a modified asphalt mixture.

Description of the Related Art

[Background Art]

A block copolymer is widely utilized in an asphalt composition.

In the technical field of an asphalt composition, an asphalt composition to which various block copolymers are added as modifiers is widely utilized in order to add performance properties according to various uses such as road pavement, a sound insulation sheet, and asphalt roofing.

As such a block copolymer as a modifier, for example, a block copolymer containing a conjugated diene monomer unit and a vinyl aromatic monomer unit is utilized.

Specifically, a technique for improving various properties of an asphalt by adding a block copolymer having a specific structure has been disclosed (see, for example, Patent Literatures 1 to 4).

[Citation List]

[Patent Literature]

[Patent Literature 1]
Japanese Patent Laid-Open No. 9-12898
[Patent Literature 2]
Japanese Patent Laid-Open No. 9-302234
[Patent Literature 3]
Japanese Patent Laid-Open No. 2004-59781
[Patent Literature 4]
Japanese Patent Laid-Open No. 2006-160886

[Summary of Invention]

[Technical Problem]

However, the asphalt compositions disclosed in Patent Literatures 1 to 3 still have an insufficient balance of high softening point properties, high elongation properties, and heat resistance stability in practical use, and are desired to be further improved. In addition, Patent Literatures 1 to 3 disclose no modified asphalt mixture.

Further, the block copolymer production step disclosed in Patent Literature 4 includes a polymerization step and a hydrogenation step, and is complicated, and has the following problem: the balance of the properties of high softening point properties, high elongation properties, heat resistance stability, low viscosity, and economic efficiency is still insufficient in practical use.

Therefore, an object of the present invention is to provide an asphalt composition containing a block copolymer and an asphalt, excellent in high softening point properties, high elongation properties, heat resistance stability, elongation recovery, compatibility, and high swelling rate properties, and a block copolymer used for the asphalt composition, and further to provide a modified asphalt mixture using the asphalt composition and excellent in dynamic stability.

[Solution to Problem]

As a result of diligent studies to solve the above problems, the present inventors have found that by using a block copolymer having a specific molecular structure, an asphalt composition excellent in high softening point properties, high elongation properties, heat resistance stability, elongation recovery, compatibility, and high swelling rate properties can be obtained, and found that by using the above asphalt composition, a modified asphalt mixture excellent in dynamic stability can be obtained, leading to completion of the present invention.

That is, the present invention is as follows.

[1] A block copolymer (P) comprising:

a polymer block (a) mainly comprising a vinyl aromatic monomer unit; and
a polymer block (b) comprising a conjugated diene monomer unit and a vinyl aromatic monomer unit,
wherein the block copolymer (P) has the following characteristics (1) to (6):

(1) a mass proportion (TS) of the vinyl aromatic monomer unit is 20% by mass or more and 45% by mass or less;
(2) a mass proportion (BS) of the polymer block (a) calculated by the following formula (I) is 15% by mass or more and 35% by mass or less;

$$\text{Mass proportion (BS) (\% by mass) of polymer block}$$
$$\text{(a) = (mass of polymer block (a) component / mass of}$$
$$\text{block copolymer (P)) × 100 \quad (I);}$$

(3) a 5% by mass toluene solution viscosity is 5 mPa·s or more and 40 mPa·s or less;
(4) a nitrogen content is 20 ppm or more and 1000 ppm or less;
(5) the block copolymer (P) comprises a block copolymer (C) having a structure having two or more of the polymer block (a), and a mass proportion of the block copolymer (C) is 50% by mass or more and 100% by mass or less;
(6) a mass proportion (RS) of the vinyl aromatic monomer unit in the polymer block (b) calculated by the following formula (II) is 3% by mass or more and 23% by mass or less

$$\text{RS = (TS - BS)/(100 - BS) × 100 ... (II).}$$

[2] The block copolymer (P) according to [1], wherein the 5% by mass toluene solution viscosity is 5 mPa·s or more and 30 mPa·s or less.
[3] The block copolymer (P) according to [1] or [2], wherein a silicon content is 50 ppm or more and 300 ppm or less.
[4] The block copolymer (P) according to any one of [1] to [3], wherein a vinyl bond content derived from the conjugated diene monomer is 5% by mass or more and 15% by mass or less.
[5] The block copolymer (P) according to any one of [1] to [4], wherein the block copolymer (P) comprises a block copolymer (C) having a structure having two or more of the polymer block (a), and a mass proportion of the block copolymer (C) is 50% by mass or more and 90% by mass or less.
[6] The block copolymer (P) according to any one of [1] to [5], wherein a peak waveform obtained by GPC measurement of the block copolymer (P) has two or more peaks, and has a peak in a polystyrene-equivalent peak molecular weight of 130,000 or less.
[7] The block copolymer (P) according to any one of [1] to [6], wherein a loss tangent (tanδ) peak temperature is -85°C or more and -60°C or less.
[8] The block copolymer (P) according to any one of [1] to [7], wherein the block copolymer (P) has an amino group and/or an alkoxysilyl group.
[9] An asphalt composition comprising:

0.5 parts by mass or more and 30 parts by mass or less of the block copolymer (P) according to any one of [1] to [8]; and
100 parts by mass of an asphalt.

[10] The asphalt composition according to [9], wherein a swelling rate S of the block copolymer (P) in the asphalt composition calculated by the following formula (III) is 4 or more:

$$\text{block copolymer swelling rate (S) = F (\%)/E (\% by}$$
$$\text{mass) ... (III)}$$

wherein E represents a mass proportion of the block copolymer (P), and F represents an area proportion of a block copolymer (P) rich phase.

[11] A modified asphalt mixture comprising:

3 parts by mass or more and 15 parts by mass or less of the asphalt composition according to [9] or [10]; and 100 parts by mass of an aggregate.

[Advantageous Effects of Invention]

According to the present invention, an asphalt composition excellent in high softening point properties, high elongation properties, heat resistance stability, elongation recovery, compatibility, and high swelling rate properties, and a block copolymer used for the asphalt composition can be provided. In addition, a modified asphalt mixture excellent in dynamic stability using the asphalt composition can be provided.

[Description of Embodiment]

Hereinafter, an embodiment for carrying out the present invention (hereinafter, referred to as "the present embodiment") will be described in detail.

The present invention is not limited to the following embodiment, and can be carried out by being modified in various ways within the scope of the gist thereof.

As used herein, the "monomer unit" refers to a constitutional unit constituting a block copolymer, and the "monomer" refers to a material constituting a block copolymer.

In addition, as used herein, "mainly comprising" means that the content of a predetermined monomer unit in the polymer block (a) or the polymer block (b) is 70% by mass or more.

The polymer block (a) mainly comprising a vinyl aromatic monomer unit may have a vinyl aromatic monomer unit content of 70% by mass or more, preferably 80% by mass, more preferably 90% by mass, and further preferably 100% by mass.

The polymer block (b) containing a conjugated diene monomer unit and a vinyl aromatic monomer unit is such that the polymer block (b) is predominated by the total content of the conjugated diene monomer unit and the vinyl aromatic monomer unit, and the total content may be 70% by mass or more, preferably 80% by mass, more preferably 90% by mass or more, and further preferably 100% by mass.

In addition, as used herein, "high softening point properties" refers to the nature of the softening point of the asphalt composition being high.

In addition, "high elongation properties" refers to the nature of the elongation of the asphalt composition being high.

"Heat resistance stability" refers to the nature of the heat resistance of the asphalt composition being high, for example when stored under high temperature conditions for a long period of time (for example, about one week).

"Elongation recovery" refers to the nature of the asphalt composition returning to the shape before stretching after stretched.

"Low melt viscosity" refers to the nature of the melt viscosity of the asphalt composition being low.

"Dynamic stability" refers to the nature of deformation being unlikely to occur when a stress is applied to a modified asphalt mixture obtained by mixing an asphalt composition with an aggregate.

"Bending fatigue resistance" refers to the nature of damage being unlikely to occur when a constant strain is repeatedly applied at a constant frequency to a modified asphalt mixture obtained by mixing an asphalt composition with an aggregate.

"Compatibility" refers to compatibility between an asphalt and a block copolymer.

"High swelling rate properties" means that the swelling rate calculated as the ratio of the area proportion of the block copolymer rich phase in an asphalt composition to the mass proportion of the block copolymer in the asphalt composition being large.

[Block copolymer (P)]

The block copolymer (P) of the present embodiment comprises a polymer block (a) mainly comprising a vinyl aromatic monomer unit, and a polymer block (b) comprising a conjugated diene monomer unit and a vinyl aromatic monomer unit, and has the following properties (1) to (6) .

(1) The mass proportion (TS) of the vinyl aromatic monomer unit is 20% by mass or more and 45% by mass or less.
(2) The mass proportion (BS) of the polymer block (a) calculated by the following formula (I) is 15% by mass or more and 35% by mass or less.

$$\text{Mass proportion BS (\% by mass) of polymer block (a)}$$
$$= \text{(mass of polymer block (a) component / mass of block}$$
$$\text{copolymer (P)) } \times 100 \ \ldots \ (I)$$

(3) The viscosity of a 5% by mass toluene solution is 5 mPa·s or more and 40 mPa·s or less.
(4) The nitrogen content is 20 ppm or more and 1000 ppm or less.
(5) The block copolymer (P) contains a block copolymer (C) having a structure having two or more polymer blocks (a), and the mass proportion of the block copolymer (C) is 50% by mass or more and 100% by mass or less.
(6) The mass proportion (RS) of the vinyl aromatic monomer unit in the polymer block (b) calculated by the following formula (II) is 3% by mass or more and 23% by mass or less.

$$RS = (TS - BS)/(100 - BS) \times 100 \ \ldots \ (II)$$

By using the block copolymer (P) having the above constitution, an asphalt composition excellent in high softening point properties, high elongation properties, heat stability, elongation recovery, compatibility, and high swelling rate properties can be provided.

(Polymer block (a))

The polymer block (a) contained in the block copolymer (P) of the present embodiment is a block mainly comprising a vinyl aromatic monomer.
Examples of the vinyl aromatic monomer unit include, but are not limited to, a vinyl aromatic monomer unit derived from styrene, $\alpha$-methylstyrene, p-methylstyrene, divinylbenzene, 1,1-diphenylethylene, N,N-dimethyl-p-aminoethylstyrene, or N,N-diethyl-p-aminoethylstyrene. Among these, a vinyl aromatic monomer unit derived from styrene is preferable from the viewpoint of easy production. The vinyl aromatic monomer units can be used singly or in combinations of two or more thereof.
The mass proportion (BS) of the polymer block (a) in the block copolymer (P) of the present embodiment is 15% by mass or more and 35% by mass or less based on the total amount of the block copolymer (P). From the viewpoint of far superior high softening point properties, ep mass proportion (BS) of the polymer block (a) is 15% by mass or more, preferably 18% by mass or more, and more preferably 20% by mass or more. On the other hand, the mass proportion (BS) of the polymer block (a) is 35% by mass or less, preferably 33% by mass or less, more preferably 30% by mass or less, and further preferably 28% by mass or less from the viewpoint of far superior compatibility.
The mass proportion (BS) of the polymer block (a) can be determined by the following formula (I), using the mass of the vinyl aromatic polymer block component (provide that the vinyl aromatic polymer block component having an average degree of polymerization of about 30 or less is excluded) determined, for example, by a method for oxidatively decomposing a polymer with tertiary butyl hydroperoxide using osmium tetroxide as a catalyst (the method disclosed in I.M. KOLTHOFF, et. al, J. Polym. Sci. 1, p.429 (1946)).

$$\text{Mass proportion (BS) (\% by mass) of polymer block}$$
$$(a)$$
$$= \text{(mass of polymer block (a) component / mass of block}$$
$$\text{copolymer (P)) } \times 100 \ \ldots \ (I)$$

(Polymer block (b))

The polymer block (b) contained in the block copolymer (P) of the present embodiment contains a conjugated diene monomer unit and a vinyl aromatic monomer unit, and is predominated by the total content of the conjugated diene monomer unit and the vinyl aromatic monomer unit.

Examples of the conjugated diene monomer unit include, but are not limited to, a conjugated diene monomer unit derived from 1,3-butadiene, 2-methyl-1,3-butadiene (isoprene), 2,3-dimethyl-1,3-butadiene, 1,3-pentadiene, 2-methyl-1,3-pentadiene, 1,3-hexadiene, or 1,3-cyclohexadiene. Among these, conjugated diene monomer units derived from 1,3-butadiene and isoprene are preferable, and a conjugated diene monomer unit derived from 1,3-butadiene is more preferable from the viewpoints of excellent mechanical strength and low cost. The conjugated diene monomer units can be used singly or in combinations of two or more thereof.

The conjugated diene monomer unit in the block copolymer (P) of the present embodiment consists of, for example, a conjugated diene monomer unit derived from a 1,2-bond and/or a 3,4-bond, and a conjugated diene monomer unit derived from a 1,4-bond.

As used herein, the "conjugated diene monomer unit derived from a 1,2-bond and/or a 3,4-bond" refers to a unit per conjugated diene compound produced as a result of polymerization of the conjugated diene compound in a 1,2-bond and/or a 3,4-bond. In addition, the "conjugated diene monomer unit derived from a 1,4-bond" refers to a unit per conjugated diene compound produced as a result of polymerization of the conjugated diene compound in a 1,4-bond.

In the present embodiment, the content of the conjugated diene monomer unit derived from a 1,2-bond and/or a 3,4-bond relative to the total content of the conjugated diene monomer unit in the block copolymer (P) (hereinafter, also referred to as the "vinyl bond content"), that is, the vinyl bond content derived from the conjugated diene monomer, is preferably 5% by mass or more and 15% by mass or less.

The vinyl bond content of the block copolymer (P) of the present embodiment is preferably 15% by mass or less, more preferably 13% by mass or less, further preferably 12% by mass or less, and further more preferably 11% by mass or less, from the viewpoint that the asphalt composition of the present embodiment has excellent heat resistance stability.

On the other hand, according to a general polymerization method, the vinyl bond content is preferably 5% by mass or more, more preferably 7% by mass or more, and further preferably 9% by mass or more from the viewpoint of easy production.

The vinyl bond content can be measured by NMR, and specifically, can be measured by the method described in Examples described later.

The vinyl bond content can be controlled by adjusting the temperature during polymerization and the amount of a polar additive added. Specifically, when the temperature during polymerization is high, the vinyl bond content tends to be low, and when the temperature during polymerization is low, the vinyl bond content tends to be high, whereas when the amount of a polar additive added is large, the vinyl bond content tends to be high, and when the amount of a polar additive added is small or no polar additive is added, the vinyl bond content tends to be low.

In the present embodiment, the polymer block (b) refers to a block containing a vinyl aromatic monomer and a conjugated diene monomer.

The mass proportion (RS) of the vinyl aromatic monomer unit in the polymer block (b) calculated by the following formula (II) is 3% by mass or more and 23% by mass or less.

In the present embodiment, the mass proportion (RS) of the vinyl aromatic monomer unit in the polymer block (b) calculated by the following formula (II) is 3% by mass or more, preferably 5% by mass or more, and more preferably 7% by mass or more from the viewpoint of far superior high softening point properties and elongation recovery.

In addition, the mass proportion (RS) of the vinyl aromatic monomer unit is 23% by mass or less, preferably 20% by mass or less, and more preferably 17% by mass or less from the viewpoint of far superior elongation recovery, compatibility and swelling rate.

The mass proportion (RS) of the vinyl aromatic monomer unit in the polymer block (b) can be determined by the following formula (II), and can be determined by subtracting the mass proportion (BS) of the polymer block (a) from the mass proportion (TS) of the vinyl aromatic monomer unit based on the total amount of the block copolymer (P) and dividing the resulting value by the mass proportion (100 - BS) of the polymer block (b) to the block copolymer (P).

$$\text{Mass proportion (RS) (\% by mass) of vinyl aromatic}$$

$$\text{monomer unit in polymer block (b)}$$

$$= (TS - BS)/(100 - BS) \times 100 \quad (II)$$

By improving the compatibility between the block copolymer (P) of the present embodiment and the asphalt, each physical property of the asphalt composition tends to be improved. In general, a component in an asphalt contains a large amount of an aromatic component, and thus the compatibility can be improved by increasing the vinyl aromatic monomer component, but if the mass proportion (BS) of the polymer block (a) is simply increased, the softening point improves, but the compatibility tends to worsen. Then, by forming the portion of the conjugated diene monomer block as a copolymer with a vinyl aromatic monomer, each physical property of the asphalt composition can be improved while ensuring compatibility. Specifically, the block copolymer (P) of the present embodiment tends to be improved in compatibility with the asphalt by containing the polymer block (b) containing a conjugated diene monomer unit and a vinyl aromatic monomer unit. It is considered that the interaction between the aromatic component contained in the asphalt and the vinyl aromatic monomer unit of the block copolymer (P) contributes to the improvement of compatibility. Because of the improvement of compatibility, the asphalt composition of the present embodiment easily exhibits a rubber-like performance property and tends to be excellent in dynamic stability when made into a modified asphalt mixture.

On the other hand, if the content of the vinyl aromatic monomer in the polymer block (b) is high, the high elongation tends to be inferior.

Accordingly, in the block copolymer (P) of the present embodiment, the mass proportion (RS) of the vinyl aromatic monomer unit in the polymer block (b) is 3% by mass or more, preferably 5% by mass or more, and more preferably 7% by mass or more, from the viewpoint of the balance of compatibility with the asphalt and high elongation properties of the asphalt composition. In addition, the mass proportion (RS) of the vinyl aromatic monomer unit is 23% by mass or less, preferably 20% by mass or less, and more preferably 17% by mass or less.

The polymer block (b) is preferably a random block. Here, "random" refers to a state in which the number of consecutive vinyl aromatic monomer units in the polymer block (b) is 10 or less.

The lower limit of the content of the short-chain vinyl aromatic monomer polymerized portion in the polymer block (b) in the block copolymer (P) of the present embodiment is not particularly limited, and is preferably 50% by mass or more, more preferably 70% by mass or more, further preferably 80% by mass or more, and further more preferably 90% by mass or more, based on a total content of the vinyl aromatic monomer unit in the polymer block (b) of 100% by mass. The upper limit of the content of the short-chain vinyl aromatic monomer polymerized portion in the polymer block (b) is not particularly limited, and is preferably 100% by mass or less, and more preferably 99% by mass or less, based on a total content of the vinyl aromatic monomer unit in the polymer block (b) of 100% by mass. When the content of the short-chain vinyl aromatic monomer polymerized portion in the polymer block (b) is within the above range, the compatibility between the block copolymer and the asphalt, the elongation, and the heat resistance stability tend to even further improve.

Here, the "short-chain vinyl aromatic monomer polymerized portion" refers to a component comprising 1 to 6 vinyl aromatic monomer units in the polymer block (b). The content of the short-chain vinyl aromatic monomer polymerized portion is determined as the content of a component comprising 1 to 6 vinyl aromatic monomer units connected in the polymer block (b), based on a total content of the vinyl aromatic monomer units in the polymer block (b) of 100% by mass.

The content of a component comprising two connected vinyl aromatic monomer units is preferably 10% by mass or more and 45% by mass or less, more preferably 13% by mass or more and 42% by mass or less, and further preferably 19% by mass or more and 36% by mass or less, based on a total content of the vinyl aromatic monomer units in the polymer block (b) of 100% by mass. When the content of the component comprising two connected vinyl aromatic monomer units is within the above range, the compatibility between the block copolymer (P) of the present embodiment and the asphalt, the elongation, and the heat resistance stability tend to even further improve.

Further, the content of a component comprising three connected vinyl aromatic monomer units is preferably 45% by mass or more and 80% by mass or less, more preferably 45% by mass or more and 75% by mass or less, and further preferably 45% by mass or more and 65% by mass or less, based on a total content of the vinyl aromatic monomer units in the polymer block (b) of 100% by mass. When the content of the component comprising three connected vinyl aromatic monomer units is within the above range, the compatibility between the block copolymer (P) of the present embodiment and the asphalt, the elongation, and the heat resistance stability tend to even further improve.

In the polymer block (b) containing a conjugated diene monomer unit and a vinyl aromatic monomer unit, when the first region to the sixth region are set so as to have the same mass in order from the polymerization initiation terminal side, and the vinyl content (vinyl bond content) before hydrogenation of the first region to the sixth region is $V_1$ to $V_6$, respectively, the distribution of the vinyl content (vinyl bond content) is not particularly limited and may be constant, or may be tapered, convex, or concave.

By adding a polar compound during the polymerization or controlling the polymerization temperature, the vinyl distribution can be controlled to be tapered, convex, or concave.

The tapered distribution refers to a distribution that satisfies $V_6 > V_5 > V_4 > V_3 > V_2 > V_1$ or $V_6 < V_5 < V_4 < V_3 < V_2 < V_1$. The convex distribution means a distribution in which $V_6$ and $V_1$ are smaller than $V_5$ and $V_2$, and $V_5$ and $V_2$ are smaller than $V_4$ and $V_3$. The concave distribution means a distribution in which $V_6$ and $V_1$ are larger than $V_5$ and $V_2$, and $V_5$ and $V_2$ are larger than $V_4$ and $V_3$.

(Content of vinyl aromatic monomer unit in block copolymer (P))

The mass proportion (TS) of the vinyl aromatic monomer unit in the block copolymer (P) of the present embodiment is 20% by mass or more and 45% by mass or less based on the total amount of the block copolymer (P). The mass proportion (TS) of the vinyl aromatic monomer unit is 20% by mass or more, preferably 24% by mass or more, and further preferably 28% by mass or more from the viewpoint of far superior high softening point properties. On the other hand, the content of the vinyl aromatic monomer unit is 45% by mass or less, more preferably 42% by mass or less, and further preferably 38% by mass or less from the viewpoint that the asphalt composition has an even higher penetration, low melt viscosity, and compatibility. The content of the vinyl aromatic monomer unit can be measured by the method described in Examples described later.

The distribution of the vinyl aromatic monomer unit in the polymer block (a) mainly comprising a vinyl aromatic monomer unit and in the polymer block (b) containing a vinyl aromatic monomer unit is not particularly limited, and may be uniform, or may be tapered, stepped, convex, or concave.

A crystal portion may be present in the polymer blocks (a) and/or (b). A plurality of segments different in content of the vinyl aromatic monomer unit may coexist in the polymer block (a) mainly comprising a vinyl aromatic monomer unit.

The block copolymer (P) of the present embodiment preferably contains a functional group containing a nitrogen atom from the viewpoint of excellent dynamic stability. Examples of the functional group include, but are not limited to, at least one functional group selected from the group consisting of an amino group, an amide group, an imino group, an imide group, a urea group, a urethane group, an isocyanate group, an amidine group, a guanidine group, and a carbodiimide group.

Any of these functional groups is preferably added to the block copolymer (P) of the present embodiment, and examples of the addition method include, but are not limited to, a method involving using a monomer having any of these functional group as a monomer constituting the block copolymer, and a method involving bonding a monomer unit constituting the block copolymer, and a residue of a polymerization initiator, coupling agent, or terminator having any of these functional groups.

The block copolymer (P) of the present embodiment has a nitrogen content of 20 to 1000 ppm, and from the viewpoint of superior dynamic stability, is 20 ppm or more, preferably 40 ppm or more, more preferably 60 ppm or more, further preferably 80 ppm or more, and further more preferably 100 ppm or more. On the other hand, from the viewpoint of economic efficiency, the nitrogen content is 1000 ppm or less, preferably 800 ppm or less, more preferably 700 ppm or less, and further preferably 600 ppm or less.

The nitrogen content of the block copolymer (P) of the present embodiment can be determined by the method described in Examples described later.

The nitrogen content of the block copolymer (P) of the present embodiment can be controlled in the above numerical range by adjusting the amounts of the polymerization initiator, monomer, coupling agent, and polymerization terminator having a nitrogen-containing group added in the polymerization step. The polymerization initiator, monomer, coupling agent, and polymerization terminator having a nitrogen-containing group are not particularly limited, and examples thereof include a polymerization initiator, a monomer, a coupling agent, and a polymerization terminator described later.

When the block copolymer (P) of the present embodiment has a nitrogen-containing group, the compatibility with the asphalt tends to improve, and the dynamic stability when made into a modified asphalt mixture tends to improve.

It is considered that the interaction such as a hydrogen bond between the nitrogen-containing group contained in the block copolymer (P) of the present embodiment and a polar group in a component contained in the asphalt contributes to the improvement of compatibility. In addition, it is considered that the dynamic stability is improved by the interaction such as a hydrogen bond between the nitrogen-containing group contained in the block copolymer (P) and a silanol group on the surface of the aggregate contained in the modified asphalt mixture.

The block copolymer (P) of the present embodiment preferably contains a functional group containing a silicon atom from the viewpoint of excellent dynamic stability. Examples of the functional group include, but are not limited to, at least one functional group selected from the group consisting of a silanol group, an alkoxysilyl group, a carbylsilyl group, and a siloxane group.

Any of these functional groups is preferably added to the block copolymer (P) of the present embodiment, and examples of the addition method include, but are not limited to, a method involving using a monomer having any of these functional group as a monomer constituting the block copolymer, and a method involving bonding a monomer unit constituting the block copolymer, and a residue of a polymerization initiator, coupling agent, or terminator having any of these functional groups.

The block copolymer (P) of the present embodiment preferably has a silicon content of 50 to 300 ppm. From the viewpoint of superior dynamic stability, the silicon content is preferably 50 ppm or more, more preferably 60 ppm or more, further preferably 80 ppm or more, and further more preferably 100 ppm or more. On the other hand, from the viewpoint of economic efficiency, the silicon content is 300 ppm or less, preferably 270 ppm or less, more preferably 240 ppm or less, and further preferably 200 ppm or less. The silicon content of the block copolymer (P) can be determined by the method described in Examples described later.

The silicon content of the block copolymer (P) of the present embodiment can be controlled in the above numerical range by adjusting the amount of the coupling agent having a silicon-containing group added in the polymerization step. The coupling agent having a silicon-containing group is not particularly limited, and examples thereof include a coupling agent described later.

The block copolymer (P) of the present embodiment more preferably contains a functional group containing a silicon atom. When the block copolymer (P) of the present embodiment has a nitrogen-containing group and a silicon-containing group, the dynamic stability when made into the modified asphalt mixture tends to further improve. It is considered that the dynamic stability is improved by forming a covalent bond between a silanol group on the surface of the aggregate contained in the modified asphalt mixture and a functional group containing a silicon atom.

(Structure of block copolymer (P))

The block copolymer (P) of the present embodiment preferably contains at least one block copolymer selected from the group consisting of the following formulas (i) to (vii).

$$a - b \ldots (i)$$

$$(a - b)_{n+1} \ldots (ii)$$

$$b - (a - b)_n \ldots (iii)$$

$$a - (b - a)_n \ldots (iv)$$

$$a - (b - a)_n - X \ldots (v)$$

$$[(a - b)_k]_m - X \ldots (vi)$$

$$[(a - b)_k - a]_m - X \ldots (vii)$$

In the above formulas (i) to (vii), a represents the polymer block (a), b represents the polymer block (b), and X is a residue of a coupling agent or a residue of a polymerization initiator such as a polyfunctional organolithium, m is an integer of 2 to 6, and n and k are each independently an integer of 1 to 4. The values of m, n, and k in the formulas (i) to (vii) may be the same or different.

When a plurality of a and b are present in the block copolymer (P), structures such as the molecular weight and composition of each may be the same or different.

In the above formulas (v) to (vii), X represents a residue of a coupling agent or a residue of a polymerization initiator such as a polyfunctional organolithium. X is preferably a residue of a coupling agent from the viewpoint of controlling the molecular weight of the block.

The block copolymer (P) of the present embodiment contains a block copolymer (C) having a structure containing two or more polymer blocks (a) in a mass proportion of 50% by mass or more and 100% by mass or less.

From the viewpoint of far superior high softening point properties, elongation recovery, and high elongation properties, the mass proportion is 50% by mass or more, preferably 55% by mass or more, more preferably 60% by mass or more, further preferably 65% by mass or more, and further more preferably 70% by mass or more.

In addition, from the viewpoint of low melt viscosity, the mass proportion is 100% by mass or less, preferably 90% by mass or less, more preferably 85% by mass or less, and further preferably 80% by mass or less.

The mass proportion of the block copolymer (C) having a structure containing two or more of the polymer blocks (a) can be determined by the method described in Examples described later.

The content of the block copolymer (C) having a structure containing two or more of the polymer blocks (a) can be controlled in the above numerical range by adjusting the method for adding a monomer in the polymerization step of the block copolymer (P) depending on the structure of the block copolymer (P), specifically, the structures shown in the above (i) to (vii), and in addition thereto, adjusting the amount of a coupling agent added, and appropriately selectively using a polymerization initiator such as a polyfunctional organolithium or adjusting the amount thereof added.

Examples of the coupling agent include a coupling agent exemplified in the method for producing a block copolymer described later.

The boundaries and the utmost ends of the polymer blocks (a) and (b) do not necessarily need to be clearly distinguished.

Examples of the polymerization initiator or the polymerization terminator include a polymerization initiator or a polymerization terminator exemplified in the method for producing a block copolymer described later.

The block copolymer (P) of the present embodiment preferably contains a branched component by a coupling reaction from the viewpoint of the balance between high softening point properties and low melt viscosity.

The branched component refers to a block copolymer component obtained by a coupling reaction with a polyfunctional coupling agent.

The block copolymer before the coupling reaction is defined as one branch, the case where two molecules of the block copolymer before the coupling reaction are contained is defined as two branches, the case where three molecules are contained is defined as three branches, and so on.

However, a block copolymer obtained without carrying out a coupling reaction is defined as two branches.

The block copolymer (P) of the present embodiment preferably contains a branched component having 2 branches or more and 8 branches or less, and more preferably contains a branched component having 2 branches or more and 6 branches or less, and further preferably contains a branched component having 2 branches or more and 4 branches or less from the viewpoints of the softening point, low melt viscosity, and producibility.

When the block copolymer before the coupling reaction is represented by (S), the ratio of (S) / (branched component having 2 branches or more and 4 branches or less) is preferably 10 to 50/90 to 50, more preferably 10 to 45/90 to 55, further preferably 10 to 40/90 to 60, and further more preferably 10 to 35/90 to 65 from the viewpoint of the balance between high softening point properties and low melt viscosity.

Further, for the mass proportion of the 2-branched component, the 3-branched component, and the 4-branched component, from the viewpoint of excellent high softening point properties, the mass proportion of the 4-branched component is preferably increased. On the other hand, from the viewpoint of excellent low melt viscosity, the mass proportion of the 2-branched component is preferably increased. Furthermore, from the viewpoint of excellent balance between high softening point properties and low melt viscosity, the mass proportion of the 3-branched component is preferably increased.

(Physical properties of block copolymer (P))

<Loss tangent peak top and peak temperature>

The block copolymer (P) has a peak top (peak height) of loss tangent ($\tan\delta$) in the range of -85°C or more and -60°C or less in a spectrum of dynamic viscoelasticity, and the value of the peak top (peak height) is preferably 0.6 or more and 2.0 or less. When the peak top (peak height) is within the above range, the block copolymer (P) tends to be excellent in high softening point properties and high elongation properties.

From the viewpoint of improving the high softening point properties and the elongation of the asphalt composition in an even more balanced manner, the value of the peak top (peak height) is more preferably 0.65 or more and 1.6 or less, further preferably 0.7 or more and 1. 5 or less, and further more preferably 0.75 or more and 1.4 or less.

The value of the peak top (peak height) can be controlled in the above range by adjusting the distribution of the vinyl bond content of the polymer block (b) in the block copolymer (P) of the present embodiment and the content of the short-chain vinyl aromatic monomer polymerized portion in the polymer block (b) .

For example, if the distribution of the vinyl bond content of the polymer block (b) is constant, the peak top (peak height) tends to be high, and if the distribution is tapered, convex, or concave, the peak top (peak height) tends to be low, whereas if the content of the short-chain vinyl aromatic monomer polymerized portion is high, the peak top (peak height) tends to be high and if the content is low, the peak top (peak height) tends to be low.

In addition, from the viewpoint of high softening point properties and high elongation properties of the asphalt composition, the block copolymer (P) of the present embodiment has a range of the peak temperature of the loss tangent ($\tan\delta$) of preferably -85°C or more and - 60°C or less, more preferably -82°C or more and -65°C or less, and further preferably -80°C or more and -70°C or less.

The peak height and the peak temperature of the loss tangent ($\tan\delta$) can be determined by the method described in Examples described later.

The peak temperature of the loss tangent ($\tan\delta$) can be controlled in such a way as to have a peak top (peak height) of the loss tangent ($\tan\delta$) in the range of -85°C or more and -60°C or less, for example by adjusting the ratio of the content of the vinyl aromatic monomer unit and the content of the conjugated diene monomer unit in the polymer block (b), the microstructure of the conjugated diene monomer unit, and the like.

For example, when the ratio of the vinyl aromatic monomer unit in the polymer block (b) is increased, the peak top of the loss tangent ($\tan\delta$) tends to be on the high temperature side, and when the ratio of the vinyl aromatic monomer unit is decreased, the peak top of the loss tangent (tan$\delta$) tends to be on the low temperature side, whereas when the vinyl bond content of the polymer block (b) is increased, the peak top of the loss tangent (tan$\delta$) tends to be on the high temperature side, and when the vinyl bond content is decreased, the peak top of the loss tangent (tan$\delta$) tends to be on the low temperature side.

<5% by mass toluene solution viscosity>

The block copolymer (P) of the present embodiment has a 5% by mass toluene solution viscosity of 5 mPa·s or more and 40 mPa·s or less.

From the viewpoint of far superior high softening point properties and elongation recovery, the 5% by mass toluene solution viscosity is 5 mPa·s or more, preferably 6 mPa·s or more, more preferably 7 mPa·s or more, and further preferably 8 mPa·s or more.

On the other hand, from the viewpoint of excellent compatibility, the 5% by mass toluene solution viscosity is 40 mPa·s or less, preferably 38 mPa·s or less, more preferably 35 mPa·s or less, and further preferably 33 mPa·s or less.

In addition, from the viewpoint of excellent balance between compatibility and softening point, the 5% by mass toluene solution viscosity is preferably 30 mPa·s or less, more preferably 27 mPa·s or less, further preferably 24 mPa·s or less, and further more preferably 20 mPa·s or less.

The 5% by mass toluene solution viscosity can be determined by the method described in Examples described later.

The 5% by mass toluene solution viscosity of the block copolymer (P) of the present embodiment can be controlled in the above numerical range by adjusting the molecular weight and the molecular weight distribution of the block copolymer (P). The molecular weight of the block copolymer (P) can be controlled by adjusting the amount of the monomer and the polymerization initiator added in the polymerization step, and the molecular weight distribution of the block copolymer (P) can be controlled by appropriately selectively using a coupling agent and a polymerization initiator such as a functional organolithium or adjusting the amounts thereof added.

For example, the 5% by mass toluene solution viscosity can be increased by increasing the weight average molecular weight of the block copolymer (P). More specifically, the 5% by mass toluene solution viscosity can be increased by reducing the amount of the polymerization initiator based on the amount of the monomer, using a higher polyvalent polyfunctional initiator, or using a higher polyvalent coupling agent.

On the other hand, the 5% by mass toluene solution viscosity can be decreased by decreasing the weight average molecular weight of the block copolymer (P). More specifically, the 5% by mass toluene solution viscosity can be decreased by increasing the amount of the polymerization initiator based on the amount of the monomer, using a monofunctional initiator, a polyfunctional initiator having a lower valence, a monofunctional modifying agent, or a coupling agent having a lower valence.

<Molecular weight distribution>

In the present embodiment, the lower limit of the molecular weight distribution (Mw/Mn) (the ratio of the weight average molecular weight (Mw) to the number average molecular weight (Mn)) of the block copolymer (P) is preferably 1.03 or more, more preferably 1.05 or more, further preferably 1.11 or more, and further more preferably 1.20 or more from the viewpoints of reducing the amount of the block copolymer (P) added to the asphalt and making the low melt viscosity far superior.

In addition, from the viewpoints of making the asphalt composition excellent in producibility, reducing the amount of the block copolymer (P) added to the asphalt, and further, making the low melt viscosity far superior, the upper limit of the molecular weight distribution (Mw/Mn) of the block copolymer (P) is preferably 2.0 or less, more preferably 1.7 or less, further preferably 1.4 or less, and particularly preferably 1.3 or less. The weight average molecular weight (Mw), number average molecular weight (Mn), and molecular weight distribution (Mw/Mn) of the polymer can be determined by the methods described in Examples described later.

<Peak waveform obtained by GPC measurement of block copolymer (P)>

For the block copolymer (P) of the present embodiment, from the viewpoint of excellent balance between low melt viscosity and high softening point properties, preferably a peak waveform obtained by GPC (gel permeation chromatography) measurement has two or more peaks and has a peak in a polystyrene-equivalent peak molecular weight of 130,000 or less.

More preferably, the peak waveform has two or more peaks and has a peak in a peak molecular weight of 120,000 or less, and further preferably, the peak waveform has 3 or more peaks and has a peak in a peak molecular weight of 120,000 or less.

The GPC measurement can be carried out by the method described in Examples described later.

The block copolymer (P) having such a peak waveform obtained by GPC measurement can be obtained by adjusting the amount of the monomer and the polymerization initiator added in the polymerization step, appropriately selectively using a monofunctional coupling agent, a polyfunctional coupling agent, and a polymerization initiator such as a polyfunctional organolithium, or adjusting the amounts thereof added.

[Asphalt composition]

The asphalt composition of the present embodiment contains 0.5 parts by mass or more and 30 parts by mass or less of the block copolymer (P) of the present embodiment described above and 100 parts by mass of an asphalt.

(Asphalt)

The asphalt composition of the present embodiment contains an asphalt.

Examples of the asphalt include, but are not limited to, a by-product of petroleum refining (petroleum asphalt), an asphalt obtained as a natural product (natural asphalt), or a mixture obtained by mixing any of these asphalts and a petroleum.

The asphalt often contains bitumen as the main component.

Examples of the asphalt include, but are not limited to, straight asphalt, semi-blown asphalt, blown asphalt, solvent deasphalt asphalt, tar, pitch, cutback asphalt to which an oil is added, and asphalt emulsion.

Among these, the asphalt is preferably straight asphalt from the viewpoint of availability.

These may be used singly or as a mixture thereof.

In addition, a petroleum solvent extracted oil, an aroma hydrocarbon process oil, or an aromatic heavy mineral oil such as extract may be added to various asphalts.

The asphalt has a penetration (measured according to JIS-K2207) of preferably 30 or more and 300 or less, more preferably 50 or more and 250 or less, and further preferably 60 or more and 200 or less. When the penetration of asphalt is within the above range, the asphalt composition of the present embodiment tends to be excellent in balance of high softening point properties, high elongation properties, low melt viscosity, dynamic stability, and heat resistance stability during storage.

In the asphalt composition of the present embodiment, the content proportion of the block copolymer (P) is 0.5 parts by mass or more and 30 parts by mass or less per 100 parts by mass of the asphalt, and from the viewpoint that the asphalt composition has far superior high softening point properties, the content proportion is preferably 2 parts by mass or more, more preferably 3 parts by mass or more, and further preferably 3.5 parts by mass or more. On the other hand, from the viewpoint that the asphalt composition has even further lower melt viscosity, the content proportion is preferably 25 parts by mass or less, more preferably 20 parts by mass or less, and further preferably 15 parts by mass or less.

(Tackifier)

In the present embodiment, the asphalt composition preferably contains a tackifier from the viewpoints of shortening the production time of the asphalt composition and making the compatibility and the aggregate stripping resistance performance of the asphalt composition far superior.

The tackifier is not particularly limited, and examples thereof include a rosin resin, a hydrogenated rosin resin, a terpene resin, a coumarone resin, a phenol resin, a terpene-phenol resin, an aromatic hydrocarbon resin, and an aliphatic hydrocarbon resin.

These tackifiers can be used singly or in combinations of two or more thereof. As a more specific tackifier, the tackifier disclosed in "Compounding Ingredients for Rubber and Plastics" (edited by Rubber Digest) can be used. An aromatic hydrocarbon resin is preferable from the viewpoint of far superior compatibility and aggregate stripping resistance performance.

The content of the tackifier in the asphalt composition of the present embodiment is preferably more than 0 parts by mass and 200 parts by mass or less, and more preferably 3 parts by mass or more and 100 parts by mass or less, per 100 parts by mass of the block copolymer (P). By setting the content in the above range, the compatibility and the aggregate stripping resistance performance tend to be far superior.

(Oil)

The asphalt composition of the present embodiment preferably contains an oil from the viewpoint of far superior low melt viscosity and compatibility.

As the oil any of a mineral oil softener and a synthetic resin softener can be used, but the oil is not limited to these.

Examples of the mineral oil softener include, but are not limited to, a paraffin oil, a naphthene oil, and an aromatic oil. In general, a paraffin hydrocarbon having 50% or more of all carbon atoms contained in the oil is referred to as a "paraffin oil," a naphthene hydrocarbon having 30% or more and 45% or less of all carbon atoms contained in the oil is referred to as a "naphthene oil," and an aromatic hydrocarbon having 35% or more of all carbon atoms contained in the oil is referred to as an "aromatic oil."

When the asphalt composition contains a mineral oil softener, the workability of the asphalt composition even further improves. As the mineral oil softener, a paraffin oil is preferable from the viewpoint of far superior low melt viscosity and low-temperature performance of the asphalt composition, and a naphthene oil is preferable from the viewpoint of far superior low melt viscosity and compatibility of the asphalt composition.

In addition, examples of the synthetic resin softener include, but are not limited to, polybutene and low molecular weight polybutadiene, and polybutene and low molecular weight polybutadiene are preferable.

The content of the oil in the asphalt composition is preferably 10 parts by mass or more and 50 parts by mass or less, more preferably 15 parts by mass or more and 40 parts by mass or less, and further preferably 20 parts by mass or more and 30 parts by mass or less, per 100 parts by mass of the block copolymer (P), from the viewpoint of suppressing oil bleeding and being able to ensure sufficient mechanical strength in practical use of the asphalt composition.

(Foaming agent)

The asphalt composition of the present embodiment may contain a foaming agent from the viewpoints of making the low melt viscosity far superior and being able to further shorten the production time of the asphalt composition.

Examples of the foaming agent include, but are not limited to, sodium hydrogen carbonate, ammonium carbonate, diazoaminobenzene, N,N'-dinitrosopentamethylenetetramine, and 2,2'-azobis(isobutyronitrile).

These foaming agents can be used singly or in combinations of two or more thereof. Among these, diazoaminobenzene, N,N'-dinitrosopentamethylenetetramine, and 2,2'-azobis(isobutyronitrile) are preferable from the viewpoint of far superior compatibility.

The proportion of the foaming agent to the whole asphalt composition of the present embodiment is preferably 0.1% by mass or more, and more preferably 0.3% by mass or more from the viewpoints of far superior low melt viscosity and being able to further shorten the production time of the asphalt composition. In addition, the proportion of the foaming agent to the whole asphalt composition is preferably 3% by mass or less, more preferably 2% by mass or less, and further preferably 1% by mass or less from the viewpoint of excellent economic efficiency.

(Additive)

The asphalt composition of the present embodiment may contain another additive generally used as a blending material for a thermoplastic resin or a rubbery polymer.

Examples of the another additive include, but are not limited to, an inorganic filler, a lubricant, a mold release agent, a plasticizer, an antioxidant, a stabilizer, a flame retardant, an antistatic agent, a reinforcing agent such as an organic fiber, a glass fiber, a carbon fiber, or a metal whisker, a colorant, a pigment, a viscosity modifier, an antistripping agent, and a pigment dispersant.

The content of the another additive is not particularly limited, and is usually 50 parts by mass or less per 100 parts by mass of the asphalt.

Examples of the inorganic filler include, but are not limited to, calcium carbonate, magnesium carbonate, magnesium hydroxide, calcium sulfate, barium sulfate, silica, clay, talc, mica, wollastonite, montmorillonite, zeolite, alumina, titanium oxide, magnesium oxide, zinc oxide, slug wool, and glass fiber.

Examples of the lubricant and the mold release agent include, but are not limited to, a pigment such as carbon black or iron oxide, stearic acid, behenic acid, zinc stearate, calcium stearate, magnesium stearate, and ethylene bisstearamide.

Examples of the stabilizer include, but are not limited to, various stabilizers such as an antioxidant or a light stabilizer.

Examples of the antioxidant include, but are not limited to, a phenol antioxidant such as a radical scavenger, a phosphorus antioxidant such as a peroxide decomposer, and a sulfur antioxidant. In addition, an antioxidant having both performance properties may be used.

These antioxidants can be used singly or in combinations of two or more thereof. Among these, a phenol antioxidant is preferable from the viewpoints of far superior heat resistance stability (heat aging resistance) of the block copolymer and being able to suppress gelation.

Examples of the antioxidant include, but are not limited to, a hindered phenol antioxidant such as 2,6-di-t-butyl-4-methylphenol, n-octadecyl-3-(4'-hydroxy-3',5'-di-t-butylphenyl)propionate, 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenylacrylate, 2,4-di-t-amyl-6-[1-(3,5-di-t-amyl-2-hydroxyphenyl)ethyl]phenylacrylate, or 2-[1-(2-hydroxy-3,5-di-tert-pentylphenyl)]acrylate; a sulfur antioxidant such as dilaurylthiodipropionate, lauryl stearyl thiodipropionate, or pentaerythritol-tetrakis($\beta$-laurylthiopropionate); and a phosphorus antioxidant such as tris(nonylphenyl)phosphite or tris(2,4-di-t-butylphenyl)phosphite.

Examples of the light stabilizer include, but are not limited to, a benzotriazole ultraviolet absorber such as 2-(2'-hydroxy-5'-methylphenyl)benzotriazole, 2-(2'-hydroxy-3',5'-t-butylphenyl)benzotriazole, or 2-(2'-hydroxy-3',5'-di-t-butylphenyl)-5-chlorobenzotriazole; a benzophenone ultraviolet absorber such as 2-hydroxy-4-methoxybenzophenone; and a hindered amine light stabilizer.

By containing an antistripping agent in the asphalt composition of the present embodiment, stripping of the asphalt composition from the aggregate tends to be able to be even further prevented when the asphalt composition and the aggregate are mixed.

Examples of the antistripping agent include a resin acid, and a specific example thereof is a polycyclic diterpene having a carboxyl group and having 20 carbon atoms, and suitable examples thereof include a rosin containing at least one selected from the group consisting of abietic acid, dehydroabietic acid, neoabietic acid, pimaric acid, isopimaric acid, and palustric acid. In addition, a fatty acid or a fatty acid amide functions as an antistripping agent and a lubricant, and thus the fatty acid or fatty acid amide can be applied as an antistripping agent.

(Rubber component)

The asphalt composition of the present embodiment may contain a rubber component other than the block copolymer (P) of the present embodiment described above (hereinafter, also simply referred to as a "rubber component").

Examples of the rubber component other than the block copolymer (P) include, but are not limited to, a natural rubber and a synthetic rubber.

Examples of the synthetic rubber include an olefin elastomer such as polyisoprene rubber, polybutadiene rubber (BR), styrene butadiene rubber (SBR), modified styrene butadiene rubber (modified SBR), styrene-butadiene-styrene block copolymer (SBS), styrene-ethylene-butylene-styrene block copolymer (SEBS), styrene-butylene-butadiene-styrene copolymer (SBBS), or ethylene propylene copolymer (EPDM); chloroprene rubber, acrylic rubber, ethylene vinyl acetate copolymer (EVA), ethylene-ethyl acrylate copolymer (EEA), and nitrile butadiene rubber (NBR).

As the rubber component other than the block copolymer (P), from the viewpoint of far superior compatibility and aggregate stripping resistance performance, polyisoprene rubber, polybutadiene rubber, styrene butadiene rubber, a styrene-butadiene-styrene block copolymer, a styrene-ethylene-butylene-styrene block copolymer, a styrene-butylene-butadiene-styrene copolymer, and an ethylene vinyl acetate copolymer are preferable, and polybutadiene rubber and a styrene-butadiene-styrene block copolymer are more preferable.

The rubber component other than the block copolymer (P) may have a functional group. As the rubber component other than the block copolymer (P), an olefin elastomer and an olefin elastomer having a functional group are preferable from the viewpoint of far superior flow resistance of the asphalt composition of the present embodiment.

When the rubber component other than the block copolymer (P) has a functional group, preferable examples of the functional group include at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group. Such rubber components other than the block copolymer (P) can be used singly or in combinations of two or more thereof.

The content of the rubber component other than the block copolymer (P) in the asphalt composition of the present embodiment is preferably 0.5 parts by mass or more and 400 parts by mass or less, more preferably 0.5 parts by mass or more and 300 parts by mass or less, further preferably 1 part by mass or more and 200 parts by mass or less, and further more preferably 5 parts by mass or more and 150 parts by mass or less, when the above-mentioned block copolymer (P) is 100 parts by mass. When the content of the rubber component other than the block copolymer (P) is in the above range, the compatibility and the aggregate stripping resistance performance tend to be far superior.

(Resin component other than block copolymer (P))

The asphalt composition of the present embodiment may contain a resin component other than the block copolymer (P) of the present embodiment.

Examples of the resin component other than the block copolymer (P) of the present embodiment include, but are not limited to, a thermoplastic resin such as polyethylene (PE), low density polyethylene (low density PE), polypropylene (PP), polyvinyl chloride (PVC), polyamide (PA), polystyrene (PS), acrylic resin, polycarbonate (PC), polyethylene terephthalate (PET), polybutylene terephthalate (PBT), polyvinylidene fluoride (PVDF), Teflon (registered trademark) (PTFE), polyether ether ketone (PEEK), polyphenylene ether (PPE), polyphenylene sulfide (PPS), polyimide (PI), or polyamideimide (PAI).

As the resin component other than the block copolymer (P) of the present embodiment, polyethylene (PE), low density polyethylene (low density PE), polyvinyl chloride (PVC), and polyamide (PA) are more preferable from the viewpoint of far superior compatibility and aggregate stripping resistance performance.

The resin component other than the block copolymer (P) of the present embodiment may have a functional group.

When the resin component other than the block copolymer (P) of the present embodiment has a functional group, preferable examples of the functional group include at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group.

Such resin components other than the block copolymer (P) can be used singly or in combinations of two or more thereof.

The content of the resin component other than the block copolymer (P) in the asphalt composition of the present embodiment is preferably 0.5 parts by mass or more and 400 parts by mass or less, more preferably 0.5 parts by mass or more and 300 parts by mass or less, further preferably 1 part by mass or more and 200 parts by mass or less, and further more preferably 5 parts by mass or more and 150 parts by mass or less, per 100 parts by mass of the block copolymer (P). When the content of the resin component other than the block copolymer (P) is in the above range, the compatibility and the aggregate stripping resistance performance of the asphalt composition of the present embodiment tend to even further improve.

The asphalt composition of the present embodiment may contain a polymer mainly comprising a vinyl aromatic monomer unit having a weight average molecular weight (Mw) of 5,000 or more and 30,000 or less (hereinafter, also referred to as a "low molecular weight vinyl aromatic polymer") as a resin component other than the block copolymer (P).

The low molecular weight vinyl aromatic polymer is preferably mainly comprising the vinyl aromatic monomer unit contained in the polymer block (a) constituting the block copolymer (P) of the present embodiment, and is more preferably mainly comprising a monomer unit derived from polystyrene.

The lower limit of the content of the low molecular weight vinyl aromatic polymer is preferably 0.5 parts by mass or more, more preferably 1.0 part by mass or more, further preferably 2.0 parts by mass or more, and further more preferably 3.0 parts by mass or more, per 100 parts by mass of the block copolymer (P) from the viewpoint of far superior low melt viscosity. In addition, the upper limit of the content of the low molecular weight vinyl aromatic polymer is preferably 5.0 parts by mass or less, more preferably 4.0 parts by mass or less, further preferably 3.0 parts by mass or less, and further more preferably 2.0 parts by mass or less, per 100 parts by mass of the block copolymer (P) from the viewpoint of far superior high softening point properties.

A commercially available low molecular weight vinyl aromatic polymer may be mixed with the block copolymer (P) of the present embodiment.

[Method for producing block copolymer (P)]

Examples of the method for producing the block copolymer (P) include, but are not limited to, a production method including a polymerization step of polymerizing at least a conjugated diene monomer and a vinyl aromatic monomer in a hydrocarbon solvent using a lithium compound as a polymerization initiator to obtain a block copolymer containing a polymer block (a) mainly comprising a vinyl aromatic monomer unit and a polymer block (b) containing a conjugated diene monomer unit and a vinyl aromatic monomer unit and a desolventization step of desolventizing a solution containing the block copolymer obtained.

In the polymerization step, a block copolymer can be obtained, for example by polymerizing a monomer containing at least a conjugated diene monomer and a vinyl aromatic monomer in a hydrocarbon solvent using a lithium compound as a polymerization initiator.

Examples of the hydrocarbon solvent used in the polymerization step include, but are not limited to, an aliphatic hydrocarbon such as butane, pentane, hexane, isopentane, heptane, or octane; an alicyclic hydrocarbon such as cyclopentane, methylcyclopentane, cyclohexane, methylcyclohexane, or ethylcyclohexane; and an aromatic hydrocarbon such as benzene, toluene, ethylbenzene, or xylene.

These hydrocarbon solvents can be used singly or in combinations of two or more thereof.

Examples of the lithium compound used as a polymerization initiator in the polymerization step include, but are not limited to, a compound in which one or more lithium atoms are bonded in a molecule such as an organomonolithium compound, an organodilithium compound, or an organopolylithium compound. Specific examples of the organolithium compounds include, but are not limited to, ethyllithium, n-propyllithium, isopropyllithium, n-butyllithium, sec-butyllithium, tert-butyllithium, hexamethylenedilithium, butadienyldilithium, and isoprenyldilithium. These lithium compounds can be used singly or in combinations of two or more thereof.

Examples of the conjugated diene monomer include, but are not limited to, a diolefin having a pair of conjugated double bonds such as 1,3-butadiene, 2-methyl-1,3-butadiene (isoprene), 2,3-dimethyl-1,3-butadiene, 1,3-pentadiene, 2-methyl-1,3-pentadiene, or 1,3-hexadiene.

Among these, 1,3-butadiene and isoprene are preferable. In addition, 1,3-butadiene is more preferable from the viewpoint of further improving the mechanical strength. The conjugated diene monomers can be used singly or in combinations of two or more thereof.

Examples of the vinyl aromatic monomer include, but are not limited to, a vinyl aromatic compound such as styrene, α-methylstyrene, p-methylstyrene, divinylbenzene, 1,1-diphenylethylene, N,N-dimethyl-p-aminoethylstyrene, or N,N-diethyl-p-aminoethylstyrene. Among these, styrene is preferable from the viewpoint of excellent economic efficiency. These vinyl aromatic monomers can be used singly or in combinations of two or more thereof.

In the polymerization step, a monomer other than the conjugated diene monomer and the vinyl aromatic monomer can also be used, and as such a monomer, a monomer copolymerizable with the conjugated diene monomer and/or the vinyl aromatic monomer can be used in a predetermined amount added.

In the polymerization step, a polar compound and/or a randomizing agent can be used, for example in order to adjust the polymerization rate, adjust the microstructure (ratio of cis, trans, and vinyl bond content) of the polymerized conjugated diene monomer unit, or adjust the ratio of reaction between the conjugated diene monomer and the vinyl aromatic monomer.

Examples of the polar compound or the randomizing agent include, but are not limited to, an ether such as tetrahydrofuran, diethylene glycol dimethyl ether, or diethylene glycol dibutyl ether; an amine such as triethylamine, N,N,N',N'-tetramethylethylenediamine (hereinafter, also referred to as "TMEDA"); a thioether, a phosphine, a phosphoramide, an alkylbenzene sulfonate, and an alkoxide of potassium or sodium.

The polymerization method to be carried out in the polymerization step of the block copolymer is not particularly limited, and a known method can be applied, and examples thereof include methods disclosed in Japanese Patent Publication No. 36-19286, Japanese Patent Publication No. 43-17979, Japanese Patent Publication No. 46-32415, Japanese Patent Publication No. 49-36957, Japanese Patent Publication No. 48-2423, Japanese Patent Publication No. 48-4106, Japanese Patent Publication No. 56-28925, Japanese Patent Laid-Open No. 59-166518, Japanese Patent Laid-Open No. 60-186577, and the like.

The block copolymer may be obtained by coupling using a coupling agent.

The coupling agent is not particularly limited, and any bifunctional or higher functional coupling agent can be used.

Examples of the bifunctional coupling agent include, but are not limited to, a bifunctional halogenated silane such as dichlorosilane, monomethyldichlorosilane, or dimethyldichlorosilane; a bifunctional alkoxysilane such as diphenyldimethoxysilane, diphenyldiethoxysilane, dimethyldimethoxysilane, or dimethyldiethoxysilane; a bifunctional halogenated alkane such as dichloroethane, dibromoethane, methylene chloride, or dibromomethane; a bifunctional halogenated tin such as dichlorotin, monomethyldichlorotin, dimethyldichlorotin, monoethyldichlorotin, diethyldichlorotin, monobutyldichlorotin, or dibutyldichlorotin; dibromobenzene, benzoic acid, CO, and 2-chloropropene.

Examples of the trifunctional coupling agent include, but are not limited to, a trifunctional halogenated alkane such as trichloroethane or trichloropropane; a trifunctional halogenated silane such as methyltrichlorosilane or ethyltrichlorosilane; and a trifunctional alkoxysilane such as methyltrimethoxysilane, phenyltrimethoxysilane, or phenyltriethoxysilane.

Examples of the tetrafunctional coupling agent include, but are not limited to, a tetrafunctional halogenated alkane such as carbon tetrachloride, carbon tetrabromide, or tetrachloroethane; a tetrafunctional halogenated silane such as tetrachlorosilane or tetrabromosilane; a tetrafunctional alkoxysilane such as tetramethoxysilane or tetraethoxysilane; and a tetrafunctional halogenated tin such as tetrachlorotin or tetrabromotin.

Examples of the pentafunctional or higher functional coupling agent include, but are not limited to, a polyhalogenated hydrocarbon compound such as 1,1,1,2,2-pentachloroethane, perchloroethane, pentachlorobenzene, perchlorobenzene, octabromodiphenyl ether, or decabromodiphenyl ether. In addition thereto, epoxidized soybean oil, a bi- to hexafunctional epoxy group-containing compound, a carboxylic acid ester, and a polyvinyl compound such as divinylbenzene can also be used.

These coupling agents can be used singly or in combinations of two or more thereof.

In the production step of the block copolymer (P) of the present embodiment, a deactivation step of deactivating an active end of the block copolymer (P) after the polymerization step is preferably carried out.

By reacting a compound having active hydrogen with the active end, the active end of the block copolymer can be deactivated. The compound having active hydrogen is not particularly limited, and examples thereof include an alcohol and water from the viewpoint of excellent economic efficiency.

It is preferable to add at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group to a copolymer (including a partially hydrogenated block copolymer) obtained by using a compound having at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group as a polymerization initiator, a monomer, a coupling agent, or a polymerization terminator.

As the polymerization initiator having a functional group, a polymerization initiator containing a nitrogen-containing group is preferable.

Examples of the polymerization initiator containing a nitrogen-containing group include, but are not limited to, dioctylaminolithium, di-2-ethylhexylaminolithium, ethylbenzylaminolithium, (3-(dibutylamino)-propyl)lithium, and piperidinolithium.

As the monomer having a functional group, a monomer containing a nitrogen-containing group is more preferable. Examples of the monomer having a nitrogen-containing group include, but are not limited to, N,N-dimethylvinylbenzylamine, N,N-diethylvinylbenzylamine, N,N-dipropylvinylbenzylamine, N,N-dibutylvinylbenzylamine, N,N-diphenylvinylbenzylamine, 2-dimethylaminoethylstyrene, 2-diethylaminoethylstyrene, 2-bis(trimethylsilyl)aminoethylstyrene, 1-(4-N,N-dimethylaminophenyl)-1-phenylethylene, N,N-dimethyl-2-(4-vinylbenzyloxy)ethylamine, 4-(2-pyrrolidinoethyl)styrene, 4-(2-piperidinoethyl)styrene, 4-(2-hexamethyleneiminoethyl)styrene, 4-(2-morpholinoethyl)styrene, 4-(2-thiazinoethyl)styrene, 4-(2-N-methylpiperazinoethyl)styrene, 1-((4-vinylphenoxy)methyl)pyrrolidine, and 1-(4-vinylbenzyloxymethyl)pyrrolidine.

Examples of the coupling agent and the polymerization terminator containing a functional group include a coupling agent and a polymerization terminator having at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group, among the coupling agents and the polymerization terminators described above.

These coupling agents and polymerization terminators having a functional group can be used singly or in combinations of two or more thereof.

Among these, a coupling agent and a polymerization terminator having a nitrogen-containing group or an oxygen-containing group are further preferable.

Examples of the coupling agent and polymerization terminator having a nitrogen-containing group or an oxygen-containing group include, but are not limited to, N,N,N',N'-tetraglycidylmetaxylenediamine, tetraglycidyl-1,3-bisaminomethylcyclohexane, tetraglycidyl-p-phenylenediamine, tetraglycidyldiaminodiphenylmethane, diglycidylaniline, $\gamma$-caprolactone, $\gamma$-glycidoxyethyltrimethoxysilane, $\gamma$-glycidoxypropyltrimethoxysilane, $\gamma$-glycidoxypropyltriphenoxysilane, $\gamma$-glycidoxypropylmethyldimethoxysilane, $\gamma$-glycidoxypropyldiethylethoxysilane, 1,3-dimethyl-2-imidazolidinone, 1,3-diethyl-2-imidazolidinone, N,N'-dimethylpropyleneurea, N-methylpyrrolidone, 2,2-dimethoxy-1-(3-trimethoxysilylpropyl)-1-aza-2-silacyclopentane, and 3-(4-methylpiperazin-1-yl)propyltriethoxysilane.

In the desolventization step, the solvent of the polymer solution containing the block copolymer (P) is desolventized. The desolventization method is not particularly limited, and examples thereof include a steam stripping method and a direct desolventization method.

The amount of the residual solvent in the block copolymer (P) obtained by the desolventization step may be as small as possible, and is preferably 2% by mass or less, more preferably 0.5% by mass or less, further preferably 0.2% by mass or less, further more preferably 0.05% by mass or less, even further preferably 0.01% by mass or less, and particularly preferably 0% by mass. Usually, the amount of the residual solvent in the block copolymer (P) is preferably 0.01% by mass or more and 0.1% by mass or less from the viewpoint of excellent economic efficiency.

An antioxidant exemplified in the section of the asphalt composition is preferably added to the block copolymer (P) from the viewpoints of making the heat resistance stability of the block copolymer (P) far superior and suppressing gelation.

From the viewpoints of preventing coloring of the block copolymer (P) and improving the mechanical strength, a decalcification step of removing a metal in the solution containing the block copolymer (P) before the desolventization step, or a neutralization step of adjusting the pH of the solution containing the block copolymer (P) may be carried out, and for example, an acid and/or carbon dioxide gas may be added.

[Method for producing asphalt composition]

The asphalt composition of the present embodiment can be produced by mixing an asphalt and 0.5 parts by mass or more and 30 parts by mass or less of the block copolymer (P) per 100 parts by mass of the asphalt.

In the method for producing the asphalt composition of the present embodiment, a crosslinking agent is preferably added.

From the viewpoint of sufficiently reacting the block copolymer (P) with the crosslinking agent, the mixing time after adding the crosslinking agent to the asphalt composition excluding the crosslinking agent is preferably 20 minutes or more, more preferably 40 minutes or more, further preferably 60 minutes or more, and further more preferably 90 minutes or more. In addition, from the viewpoint of suppressing thermal degradation of the block copolymer (P), the mixing time after adding the crosslinking agent to the asphalt composition excluding the crosslinking agent is preferably 5 hours or less, and more preferably 3 hours or less.

The mixing method is not particularly limited, and any mixing machine can be used.

Examples of the mixing machine include a melt kneading machine such as an extruder, a kneader, or a Banbury mixer, a stirring machine such as a vertical impeller and a side arm type impeller, a homogenizer including an emulsifying machine, and a pump.

In the method for producing the asphalt composition of the present embodiment, an asphalt, the block copolymer (P), a crosslinking agent, and any additive are preferably mixed in the range of 140°C to 220°C using a stirring tank or the like.

(Swelling rate S of block copolymer (P) in asphalt composition)

In the asphalt composition of the present embodiment, the swelling rate S of the block copolymer (P) in the asphalt composition is preferably 4 or more.

When the mass proportion (RS) of the vinyl aromatic monomer unit in the polymer block (b) calculated by the above formula (II) is 3% by mass or more and 23% by mass or less, the compatibility with the asphalt component improves, and the block copolymer (P) tends to be able to achieve a swelling rate S of 4 or more.

From the viewpoint of far superior high softening point properties and elongation recovery, it is preferably 4 or more, more preferably 4.5 or more, and further preferably 5 or more.

The swelling ratio S of the block copolymer (P) can be calculated by the following formula (III) with the mass proportion E of the block copolymer (P) and the area proportion F of the block copolymer (P) rich phase.

The area proportion of the block copolymer (P) rich phase can be measured by the method described in Examples described later.

$$\mathtt{Block\ copolymer\ swelling\ rate\ S\ =\ F\ (\%)/E\ (\%\ by}$$
$$\mathtt{mass)\quad (III)}$$

[Modified asphalt mixture]

The modified asphalt mixture contains 3 parts by mass or more and 15 parts by mass or less of the asphalt composition of the present embodiment described above, and 100 parts by mass of an aggregate.

The aggregate is not particularly limited, and for example, any aggregate for a pavement material described in the "Outline of Asphalt Pavement" issued by the Japan Road Association can be used.

Specific examples of the aggregate include crushed stone, a boulder, gravel, and steel slag.

In addition, an asphalt-coated aggregate obtained by coating any the above aggregates with an asphalt, a recycled aggregate, and the like can also be used.

In addition thereto, as an aggregate, a similar granular material, an artificial fired aggregate, a fired foam aggregate, an artificial lightweight aggregate, a pottery particle, luxobite, an aluminum particle, a plastic particle, a ceramic, emery, a construction waste, a fiber, and the like can also be used.

Aggregates are generally classified into a coarse aggregate, a fine aggregate, and a filler, and as the aggregate used in the modified asphalt mixture of the present embodiment, any of a coarse aggregate, a fine aggregate, and a filler can be used.

The coarse aggregate refers to an aggregate that is retained on a 2.36-mm sieve, and examples of the type of the coarse aggregate generally include No. 7 crushed stone having a particle size range of 2.5 mm or more and 5 mm or less, and No. 6 crushed stone having a particle size range of 5 mm or more and 13 mm or less, No. 5 crushed stone having a particle size range of 13 mm or more and 20 mm or less, and No. 4 crushed stone having a particle size range of 20 mm or more and 30 mm or less.

In the modified asphalt mixture of the present embodiment, an aggregate obtained by mixing one or two or more of these coarse aggregates having various particle size ranges, a synthesized aggregate, or the like can be used.

These coarse aggregates may be aggregates coated with about 0.3% by mass or more and 1% by mass or less of straight asphalt.

The fine aggregate refers to an aggregate that passes through a 2.36-mm sieve and stops (stays) on a 0.075-mm sieve, and examples of the fine aggregate include river sand, hill sand, mountain sand, sea sand, screenings, crushed stone dust, silica sand, artificial sand, glass cullet, casting sand, and recycled aggregate crushed sand.

The filler is an aggregate that passes through a 0.075-mm sieve, and examples of the filler include a filler component of screenings, stone powder, slaked lime, cement, incinerator ash, clay, talc, fly ash, and carbon black. In addition thereto, as the filler, a rubber powder particle, a cork powder particle, a wood powder particle, a resin powder particle, a fiber powder particle, pulp, an artificial aggregate, and the like that pass through a 0.075-mm sieve can be used.

These aggregates can be used singly or in combinations of two or more thereof.

The modified asphalt mixture can be produced by at least mixing the asphalt composition of the present embodiment and an aggregate, and the mixing method is not particularly limited.

The mixing temperature of the asphalt composition and the aggregate can be usually in the range of 120°C or more and 200°C or less.

The content of the asphalt composition based on the whole modified asphalt mixture is preferably 3 parts by mass or more and 15 parts by mass or less, more preferably 4 parts by mass or more and 12 parts by mass or less, and further preferably 5 parts by mass or more and 10 parts by mass or less per 100 parts by mass of the aggregate from the viewpoint of obtaining a modified asphalt mixture having excellent mass loss resistance and excellent strength reduction resistance at the time of oil attachment.

As a method for producing the modified asphalt mixture, for example, a so-called plant mix method in which when an asphalt and an aggregate are mixed, the block copolymer of the present embodiment is directly mixed to modify the asphalt can be used.

[Uses of asphalt composition and modified asphalt mixture]

The asphalt composition and the modified asphalt mixture of the present embodiment can be used in various uses disclosed in The Shell Bitumen Handbook edited by D. Whiteoak and published by Shell Bitumen U.K. in the United Kingdom in 1990.

In addition, other uses include a waterproofing sheet, a roof coating, a primer adhesive for a waterproofing sheet, a sealing binder for pavement, an adhesive for recycled asphalt pavement, a binder for cold prepared asphalt concrete, a fiberglass mat binder, a slip coat for concrete, a protective coat for concrete, and sealing of a crack in a pipeline and an iron part.

Examples of the pavement form using the modified asphalt mixture of the present embodiment include, but are not limited to, a dense-graded pavement form, a drainage pavement form, a permeable pavement form, a dense-graded gap asphalt pavement form, a crushed stone mastic asphalt pavement form, a colored pavement form, a semi-flexible pavement form, a water-retaining pavement form, and a thin-layer pavement form.

In addition, the production method for obtaining each pavement form is not particularly limited, and examples thereof include a hot method, a warm method, and a cold method.

The modified asphalt mixture used in the dense-grained pavement form preferably contains 40% by mass or more and 55% by mass or less of a coarse aggregate, 40% by mass or more and 55% by mass or less of a fine aggregate, and 3% by mass or more and 10% by mass or less of a filler when the total amount of the aggregate is 100% by mass, from the viewpoint of even further improving the flow resistance and the skid resistance. In the modified asphalt mixture used in the dense-grained pavement, the asphalt composition is preferably 5 parts by mass or more and 7 parts by mass or less per 100 parts by mass of the aggregate, and the block copolymer (P) of the present embodiment is 3 parts by mass or more and 5.5 parts by mass or less per 100 parts by mass of the asphalt.

The modified asphalt mixture used in the drainage pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the drainage, the visibility, and the noise properties.

In the modified asphalt mixture used in the drainage pavement form, the asphalt composition is preferably 4 parts by mass or more and 6 parts by mass or less per 100 parts by mass of the aggregate, and the block copolymer (P) of the present embodiment is 5 parts by mass or more and 10 parts by mass or less per 100 parts by mass of the asphalt.

The modified asphalt mixture used in the permeable pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the permeability.

In the modified asphalt mixture used in the permeable pavement form, the asphalt composition is preferably 4 parts by mass or more and 6 parts by mass or less per 100 parts by mass of the aggregate, and the block copolymer (P) of the present embodiment is more than 0 parts by mass and 6 parts by mass or less per 100 parts by mass of the asphalt.

The modified asphalt mixture used in the dense-grained gap pavement form preferably contains 50% by mass or more and 60% by mass or less of a coarse aggregate, 30% by mass or more and 40% by mass or less of a fine aggregate, and 3% by mass or more and 10% by mass or less of a filler when the total amount of the aggregate is 100% by mass, from the viewpoint of even further improving the wearability, the flow resistance, the durability, and the skid resistance.

In the modified asphalt mixture used in the dense-grained gap pavement form, the asphalt composition is preferably 4.5 parts by mass or more and 6 parts by mass or less per 100 parts by mass of the aggregate, and the block copolymer (P) of the present embodiment is 5 parts by mass or more and 12 parts by mass or less per 100 parts by mass of the asphalt.

The modified asphalt mixture used in the crushed stone mastic asphalt pavement form preferably contains 55% by mass or more and 70% by mass or less of a coarse aggregate, 15% by mass or more and 30% by mass or less of a fine aggregate, and 5% by mass or more and 15% by mass or less of a filler when the total amount of the aggregate is 100% by mass, from the viewpoint of even further improving the wear resistance, non-permeability, the stress relaxation, the flow resistance, and the noise properties.

In the modified asphalt mixture used in the crushed stone mastic asphalt pavement form, the asphalt composition is preferably 5.5 parts by mass or more and 8 parts by mass or less per 100 parts by mass of the aggregate, and the block copolymer (P) of the present embodiment is 4 parts by mass or more and 10 parts by mass or less per 100 parts by mass of the asphalt.

The modified asphalt mixture used in the water-retaining pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoints of even further suppressing increase in pavement temperature and even further improving the water retention.

In the modified asphalt mixture used in the water-retaining pavement form, the asphalt composition is preferably 4 parts by mass or more and 6 parts by mass or less per 100 parts by mass of the aggregate, and the block copolymer (P) of the present embodiment is 4 parts by mass or more and 10 parts by mass or less per 100 parts by mass of the asphalt. The modified asphalt mixture used in the water-retaining pavement form preferably has a voidage of about 15% or more and 20% or less, and a void is preferably filled with a water-retaining material such as a cement or a gypsum.

The modified asphalt mixture used in the thin-layer pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the economic efficiency, the shortening of the construction period, and the workability.

In the modified asphalt mixture used in the thin-layer pavement form, the asphalt composition is preferably 4 parts by mass or more and 6.5 parts by mass or less per 100 parts by mass of the aggregate, and the block copolymer (P) of the present embodiment is 4 parts by mass or more and 8 parts by mass or less per 100 parts by mass of the asphalt. In the modified asphalt mixture used in the thin-layer pavement form, the coarse aggregate is preferably No. 7 crushed stone having a particle size range of 2.5 mm or more and 5 mm or less.

The asphalt composition of the present embodiment can also be suitably used for an asphalt waterproofing sheet. When the asphalt composition of the present embodiment is used, the softening point of the asphalt waterproofing sheet can be increased, and the low temperature bendability can be improved.

In addition, the production method for obtaining each pavement form is not particularly limited, and examples thereof include a hot method, a warm method, and a cold method.

[Examples]

Hereinafter, the present invention will be described in detail with reference to specific Examples and Comparative Examples, but the present invention is not limited at all by the following Examples and Comparative Examples.

[Methods for measuring physical properties of block copolymer]

The methods for measuring physical properties of the block copolymer are shown below.

(Measurement of vinyl bond content derived from conjugated diene monomer of block copolymer)

The vinyl bond content derived from the conjugated diene monomer in the block copolymer was measured by nuclear magnetic resonance spectrum analysis (NMR) under the following conditions.

By adding a large amount of methanol to a reaction solution containing the block copolymer, the block copolymer was precipitated and collected. This block copolymer was then extracted with acetone and the block copolymer was vacuum dried. Using this as a sample for $^1$H-NMR measurement, the vinyl bond content derived from the conjugated diene monomer of the block copolymer was measured.

The conditions for $^1$H-NMR measurement are described below.
Measuring instrument: JNM-LA400 (manufactured by JEOL)
Solvent: Deuterated chloroform
Measurement sample: The dried block copolymer described above
Sample concentration: 50 mg/mL
Observation frequency: 400 MHz
Chemical shift standard: TMS (tetramethylsilane)
Pulse delay: 2.904 seconds
Number of scans: 64 times
Pulse width: 45°
Measurement temperature: 26°C

(Measurement of mass proportion (TS) of vinyl aromatic monomer unit (styrene) in block copolymer)

A certain amount of the block copolymer was dissolved in chloroform, and the peak intensity at an absorption wavelength (262 nm) due to the vinyl aromatic compound component (styrene) in the solution was measured using an ultraviolet spectrophotometer (UV-2450, manufactured by Shimadzu Corporation).

From the resulting peak intensity, the mass proportion (TS) of the vinyl aromatic monomer unit (styrene) in the block copolymer was calculated using a calibration curve.

(Measurement of mass proportion (BS) of polymer block (a) mainly comprising vinyl aromatic monomer unit in block copolymer)

The mass proportion (BS) of the polymer block (a) mainly c comprising the vinyl aromatic monomer unit in the block copolymer was measured using the following solution for polymer decomposition by the osmium tetroxide decomposition method disclosed in I. M. Kolthoff, et al., J. Polym. Sci., 1946, Vol.1, p.429.
Measurement sample: The dried block copolymer described above
Solution for polymer decomposition: A solution of 0.1 g of osmium tetroxide in 125 mL of tertiary butanol

(Method for measuring peak molecular weight (BSPMw) of polymer block (a))

The sample for measuring the mass proportion (BS) of the polymer block (a) was analyzed by GPC.

The analysis conditions were the same as those described below (Measurement of weight average molecular weight (Mw) and molecular weight distribution (Mw/Mn) of block copolymer).

The peak molecular weight (BSPMw) of the polymer block (a) was determined from the obtained molecular weight distribution. When the molecular weight distribution is multimodal, BSPMw is the number average molecular weight instead of the peak molecular weight.

(Measurement of number average molecular weight (Mn), weight average molecular weight (Mw), polystyrene-equivalent peak molecular weight (PMwA), and molecular weight distribution (Mw/Mn) of block copolymer)

The number average molecular weight (Mn), the weight average molecular weight (Mw), and the polystyrene-equivalent peak molecular weight (PMwA) of the block copolymer were determined based on the peak molecular weight on a chromatogram by using the calibration curve (prepared using the peak molecular weight of standard polystyrene) obtained from the measurement of a commercially available standard polystyrene. The polystyrene-equivalent peak molecular weight (PMwA) is a value of the peak top molecular weight.

The measurement software used was HLC-8320 EcoSEC collection, and the analysis software used was HLC-8320 analysis. In addition, the molecular weight distribution (Mw/Mn) of the block copolymer was determined from the ratio of the polystyrene-equivalent weight average molecular weight (Mw) and the number average molecular weight (Mn). The measurement conditions are shown below.
GPC: HLC-8320GPC (manufactured by Tosoh Corporation)
Detector: RI
Detection sensitivity: 3 mV/min
Sampling pitch: 600 msec
Column: 4 pieces of TSKgel superHZM-N (6 mm ID $\times$ 15 cm) (manufactured by Tosoh Corporation)
Solvent: THF
Flow rate: 0.6 mm/min

Concentration: 0.5 mg/mL
Column temperature: 40°C
Injection volume: 20 µL

(Measurement of mass proportions of block copolymers having different branched structures contained in block copolymer)

The inflection point of each peak-to-peak curve obtained from the above GPC was vertically divided, and the ratio of each divided area to the total area was defined as the area ratio of a block copolymer component having a different branched structure, and the mass ratio of each block copolymer was determined.

For each inflection point between peaks, peak division was carried out by fitting processing by Gaussian approximation using HLC-8320 waveform separation software, and the intersection of each peak was set as the inflection point.

(Calculation of micro-converted peak molecular weight (PMwB))

The peak molecular weight (PMwA) on the GPC chromatogram measured by the above method is in terms of polystyrene.

The micro-converted peak molecular weight (PMwB) was determined by the following formula (IV) using the molecular weight correction value (DMw) of the conjugated diene monomer unit.

When the conjugated diene monomer unit was butadiene, PMwB was calculated with DMw = 0.6.

When the GPC chromatogram had a plurality of peaks, the micro-converted peak molecular weight (PMwB) was calculated for each peak.

Micro-converted molecular weight Peak molecular

weight (PMwB)

$$= PMwA \times (TS + (1 - TS) \times DMw) \cdots (IV)$$

(Calculation of mass proportion of block copolymer (C) having a structure containing two or more polymer blocks (a))

The number N of the polymer blocks (a) mainly comprising the vinyl aromatic monomer unit contained in the block copolymer was calculated for each of the peak-divided peaks on the GPC chromatogram described in (Measurement of mass proportions of block copolymers having different branched structures contained in block copolymer), based on the following formula (V).

Number N of polymer blocks (a) contained in the

block copolymer

$$= PMwB \times BS / BSPMw \cdots (V)$$

A peak having a value of this number N of 1.6 or more was assumed to contain two or more polymer blocks (a), and the sum of the area proportions of peaks having a value of this number N of 1.6 or more was defined as the mass proportion of the block copolymer (C) having a structure containing two or more polymer blocks (a).

(Measurement of 5% by mass toluene solution viscosity)

The 5% by mass toluene solution viscosity was measured using a Cannon-Fenske viscosity tube in a constant temperature bath controlled at a temperature of 25°C.

(Measurement of nitrogen content)

The nitrogen content is the proportion of the mass of a nitrogen atom to the mass of a block copolymer.

The nitrogen content was calculated using TN-2100H manufactured by Mitsubishi Chemical Analytech Co.,

Ltd. according to the method described in 4. Chemiluminescence method of JIS K 2609: 1998, Crude petroleum and petroleum products-Determination of nitrogen content.

(Measurement of silicon content)

The silicon content is the proportion of the mass of a silicon atom to the mass of a block copolymer.
The silicon content was calculated using a calibration curve from a peak intensity obtained by measurement using Supermini 200 manufactured by Rigaku Corporation.

(Peak temperature and peak height of loss tangent (tan$\delta$) of block copolymer)

A dynamic viscoelastic spectrum was measured by the following method, and the peak temperature and peak height of the loss tangent (tan$\delta$) were determined.
The measurement was carried out using a torsion type geometry of the apparatus ARES (manufactured by TA Instruments, Inc., trade name), under conditions of a sample having a thickness of 2 mm, a width of 10 mm, and a length of 20 mm, a strain (initial strain) of 0.5%, a frequency of 1 Hz, a measurement range of -100°C to 100°C, and a heating rate of 3°C/min.

[Examples 1 to 22 and 45 to 62] and [Comparative Examples 1 to 10 and 21 to 25]

(Production of block copolymer 1)

Polymerization was carried out by the following method using a stirring apparatus having an internal volume of 100 L and a tank reactor equipped with a jacket.

(First stage)

After placing 44.8 kg of cyclohexane in the reactor and adjusting the temperature to 50°C, 800 g of styrene as a monomer was added over about 3 minutes, and then a n-butyllithium (hereinafter referred to as nBL) cyclohexane solution in a pure amount of 6.9 g was added to start the reaction.

(Second stage)

Next, 5 minutes after the temperature in the reactor reached the maximum value, 320 g of styrene and 6080 g of butadiene were continuously supplied to the reactor at a constant rate over 70 minutes to react.

(Third stage)

After that, 5 minutes after the temperature in the reactor reached the maximum value, 800 g of styrene was added over about 3 minutes to react.

(Termination reaction)

After that, 5 minutes after the temperature in the reactor reached the maximum value, 5.3 g of an amide-containing terminator (1,3-dimethyl-2-imidazolidinone) (modifying agent K) was added to react for 10 minutes. Next, after completion of the reaction, 2.4 g of methanol was added to obtain the block copolymer.
After completion of the polymerization step, 0.25 parts by mass of a stabilizer (octadecyl-3-(3,5-di-t-butyl-4-hydroxyphenyl)propionate) was added per 100 parts by mass of block copolymer 1.
The structure and composition of block copolymer 1 were as shown in Table 7.

(Production of block copolymers 2 to 20, 23 to 31, 34 to 39, 41, 44, 46 to 51, and 55)

The block copolymers were obtained in the same manner as in the production of block copolymer 1 except that the amount of styrene added in the first stage, the amount of nBL added in the first stage, the amount of butadiene added in the second stage, the amount of styrene added in the second stage, the amount of styrene added in the third stage, the type of the terminator and the amount thereof added in the fourth stage, and the amount of methanol added in the fourth stage were changed as shown in Table 1, Table 2, Table 3, Table 4, Table 5, and Table 6.
The structures and compositions of block copolymers 2 to 20, 23 to 31, 34 to 39, 41, 44, 46 to 51, and 55 were as shown in Table 7, Table 8, Table 9, Table 10, Table 11, and Table 12.

(Production of block copolymers 21 and 22)

The block copolymers were obtained in the same manner as in the production of block copolymer 1 except that the amount of styrene added in the first stage, the amount of nBL added in the first stage, the amount of butadiene added in the second stage, the amount of styrene added in the second stage, the amount of styrene added in the third stage, the type of the terminator and the amount thereof added in the fourth stage, and the amount of methanol added in the fourth stage were changed as shown in Table 2, and 9.0 g of piperidine was added after the addition of styrene and before the addition of nBL in the first stage.
The structures and compositions of block copolymers 21 and 22 were as shown in Table 8.

(Production of block copolymer 32)

The block copolymer was obtained in the same manner as in the production of block copolymer 1 except that the amount of styrene added in the first stage, the amount of nBL added in the first stage, the amount of styrene added in the second stage, the amount of butadiene added in the second stage, the amount of styrene added in the third stage, the type of the terminator and the amount thereof added in the fourth stage, and the amount of methanol added in the fourth stage were changed as shown in Table 4, and 4.1 g of N,N,N',N'-tetramethylethylenediamine (hereinafter referred to as TMEDA) was added after the addition of styrene and before the addition of nBL in the first stage.
The structure and composition of block copolymer 32 were as shown in Table 10.

(Production of block copolymer 33)

The block copolymer was obtained in the same manner as in the production of block copolymer 1 except that the amount of styrene added in the first stage, the amount of nBL added in the first stage, the amount of styrene added in the second stage, the amount of butadiene added in the second stage, the amount of styrene added in the third stage, the type of the terminator and the amount thereof added in the fourth stage, and the amount of methanol added in the fourth stage were changed as shown in Table 4, and 8.2 g of TMEDA was added after the addition of methanol in the termination reaction. The structure and composition of block copolymer 33 were as shown in Table 10.

(Production of block copolymer 40)

The block copolymer was obtained in the same manner as in the production of block copolymer 1 except that the amount of styrene added in the first stage, the amount of nBL added in the first stage, the amount of butadiene added in the second stage, the amount of styrene added in the second stage, the amount of styrene added in the third stage, the type of the terminator and the amount thereof added in the fourth stage, and the amount of methanol added in the fourth stage were changed as shown in Table 5, and 11.8 g of piperidine was added after the addition of styrene and before the addition of nBL in the first stage.
The structure and composition of block copolymer 40 were as shown in Table 11.

(Production of block copolymer 42)

The block copolymer was obtained in the same manner as in the production of block copolymer 1 except that the amount of styrene added in the first stage, the amount of nBL added in the first stage, the amount of butadiene added in the second stage, the amount of styrene added in the second stage, the amount of styrene added in the third stage, the type of the terminator and the amount thereof added in the fourth stage, and the amount of methanol added in the fourth stage were changed as shown in Table 5, the reaction start temperature in the first stage was changed to 70°C, and styrene and butadiene in the second stage were continuously supplied to the reactor at a constant rate over 100 minutes.
The structure and composition of block copolymer 42 were as shown in Table 11.

(Production of block copolymers 43 and 45)

The block copolymers were obtained in the same manner as in the production of block copolymer 1 except that the amount of styrene added in the first stage, the amount of nBL added in the first stage, the amount of styrene added in the second stage, the amount of butadiene added in the second stage, the amount of styrene added in the third stage, the type of the terminator and the amount thereof added in the fourth stage, and the amount of methanol added in the fourth stage were changed as shown in Table 5 and Table 6, and 1.6 g of TMEDA was added after the addition of styrene and before the addition of nBL in the first stage. The structures and compositions of block copolymers 43 and 45 were as shown in Table 11 and Table 12.

(Production of block copolymers 52 and 53)

The block copolymers were obtained in the same manner as in the production of block copolymer 1 except that the amount of styrene added in the first stage, the amount of nBL added in the first stage, the amount of styrene added in the second stage, the amount of butadiene added in the second stage, the amount of styrene added in the third stage, the type of the terminator and the amount thereof added in the fourth stage, and the amount of methanol added in the fourth stage were changed as shown in Table 4, 2.0 g of tetrahydrofuran was added after the addition of styrene and before the addition of nBL in the first stage, and styrene and butadiene in the second stage were continuously supplied to the reactor at a constant rate over 100 minutes. The structures and compositions of block copolymers 52 and 53 were as shown in Table 10.

(Production of block copolymer 54)

Polymerization was carried out by the following method using a stirring apparatus having an internal volume of 100 L and a tank reactor equipped with a jacket.

(First stage)

After placing 44.8 kg of cyclohexane in the reactor and adjusting the temperature to 70°C, 1600 g of styrene and 1200 g of butadiene as monomers were added over about 3 minutes, then a n-butyllithium (nBL) cyclohexane solution in a pure amount of 8.8 g was added to start the reaction, and then the resulting mixture was stirred for 2 hours while maintaining 70°C.

(Second stage)

Next, 1600 g of styrene and 3600 g of butadiene were added over about 3 minutes, and the resulting mixture was stirred for 2 hours while maintaining 70°C.

(Termination reaction)

After that, 5.1 g of an amide-containing terminator (1,3-dimethyl-2-imidazolidinone) (modifying agent K) was added to react for 10 minutes. Next, after completion of the reaction, 3.1 g of methanol was added to obtain the block copolymer.
After completion of the polymerization step, 0.25 parts by mass of a stabilizer (octadecyl-3-(3,5-di-t-butyl-4-hydroxyphenyl)propionate) was added per 100 parts by mass of block copolymer 54.
The structure and composition of block copolymer 54 were as shown in Table 12.
When the amount of butadiene added in the first stage shown in Table 1, Table 2, Table 3, Table 4, Table 5, and Table 6 is -, this means that butadiene was not added in the first stage, when the amount of styrene added in the second stage is -, this means that styrene was not added in the second stage, and when the amount of styrene added in the third stage is -, this means that the reaction of the third stage was not carried out.
In the modifying agents K, L, M, N, O, P, Q, R, and S shown in Table 1, Table 2, Table 3, Table 4, Table 5, and Table 6, K means 1,3-dimethyl-2-imidazolidinone, L means 2,2-dimethoxy-1-(3-trimethoxysilylpropyl)-1-aza-2-silacyclopentane, M means 3-(4-methylpiperazin-1-yl)propyltriethoxysilane, N means tetraglycidyl-1,3-bisaminomethylcyclohexane, O means tetraethoxysilane, P means 3-(N,N-dimethylamino)propyldimethylethoxysilane, Q means diglycidylaniline, R means ZX-1059 manufactured by NIPPON STEEL Chemical & Material Co., Ltd., and S means tin tetrachloride, and the examples marked with - indicate that no modifying agent was added during the termination reaction.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Block copolymer | | 1 | 2 | 3 | 4 | 5 | 6 | 7 | 8 | 9 | 10 | 11 |
| First stage | Styrene (g) | 800 | 800 | 800 | 800 | 1000 | 1000 | 1000 | 1000 | 1200 | 1200 | 1200 |
| | nBL (g) | 6.9 | 6.8 | 6.6 | 6.5 | 6.9 | 6.9 | 6.7 | 6.7 | 6.6 | 6.5 | 6.5 |
| Second stage | Butadiene (g) | 6080 | 5760 | 5440 | 5120 | 5700 | 5400 | 5100 | 4800 | 5320 | 5040 | 4760 |
| | Styrene (g) | 320 | 640 | 960 | 1280 | 300 | 600 | 900 | 1200 | 280 | 560 | 840 |
| Third stage | Styrene (g) | 800 | 800 | 800 | 800 | 1000 | 1000 | 1000 | 1000 | 1200 | 1200 | 1200 |
| Termination reaction | Modifying agent | K | K | K | K | K | K | K | K | K | K | K |
| | Amount added (g) | 5.3 | 5.2 | 5.1 | 5.0 | 5.2 | 5.1 | 5.0 | 4.9 | 5.1 | 5.0 | 4.9 |
| | Methanol (g) | 2.4 | 2.3 | 2.3 | 2.2 | 2.3 | 2.3 | 2.2 | 2.2 | 2.3 | 2.2 | 2.2 |

EP 3 875 491 A2

[Table 2]

| | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| Block copolymer | | 12 | 13 | 14 | 15 | 16 | 17 | 18 | 19 | 20 | 21 | 22 |
| First stage | Styrene (g) | 1200 | 2000 | 2000 | 2000 | 1000 | 800 | 1000 | 800 | 1000 | 1000 | 1000 |
| | nBL (g) | 6.3 | 10.4 | 10.4 | 10.6 | 6.1 | 6.2 | 8.0 | 7.8 | 6.8 | 6.8 | 6.8 |
| Second stage | Butadiene (g) | 4480 | 5400 | 5400 | 5400 | 5400 | 5760 | 5400 | 5760 | 5400 | 5400 | 5400 |
| | Styrene (g) | 1120 | 600 | 600 | 600 | 600 | 640 | 600 | 640 | 600 | 600 | 600 |
| Third stage | Styrene (g) | 1200 | - | - | - | 1000 | 800 | 1000 | 800 | 1000 | 1000 | 1000 |
| Termination reaction | Modifying agent | K | L | M | N | K | K | K | K | K | - | K |
| | Amount added (g) | 4.8 | 8.0 | 16.9 | 9.5 | 4.4 | 4.3 | 6.6 | 6.2 | 2.0 | - | 5.1 |
| | Methanol (g) | 2.1 | 4.1 | 4.1 | 4.1 | 2.0 | 1.9 | 2.9 | 2.8 | 2.3 | 2.3 | 2.3 |

[Table 3]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Block copolymer | | 23 | 24 | 25 | 26 | 27 | 28 | 29 |
| First stage | Styrene (g) | 800 | 800 | 1000 | 1000 | 1200 | 1000 | 1200 |
| | nBL (g) | 7.2 | 6.5 | 7.0 | 6.4 | 6.9 | 6.6 | 6.8 |
| Second stage | Butadiene (g) | 6400 | 4800 | 6000 | 4500 | 5600 | 5400 | 5600 |
| | Styrene (g) | - | 1600 | - | 1500 | - | 600 | - |
| Third stage | Styrene (g) | 800 | 800 | 1000 | 1000 | 1200 | 1000 | 1200 |
| Termination reaction | Modifying agent | K | K | K | K | K | - | - |
| | Amount added (g) | 5.5 | 4.9 | 5.3 | 4.8 | 5.2 | - | - |
| | Methanol (g) | 2.4 | 2.2 | 2.4 | 2.1 | 2.3 | 2.3 | 2.3 |

EP 3 875 491 A2

[Table 4]

| | | Comparative Example 8 | Comparative Example 9 | Comparative Example 10 | Comparative Example 21 | Comparative Example 22 | Comparative Example 23 | Comparative Example 24 | Comparative Example 25 |
|---|---|---|---|---|---|---|---|---|---|
| Block copolymer | | 30 | 31 | 32 | 33 | 34 | 38 | 52 | 53 |
| First stage | Styrene (g) | 1400 | 1000 | 1000 | 1000 | 2000 | 2000 | 1840 | 720 |
| | nBL (g) | 6.9 | 4.6 | 6.8 | 6.8 | 10.6 | 6.8 | 14.4 | 8.0 |
| Second stage | Butadiene (g) | 5200 | 5400 | 5400 | 5400 | 5400 | 5400 | 4880 | 4800 |
| | Styrene (g) | - | 600 | 600 | 600 | 600 | 600 | 1280 | 2000 |
| Third stage | Styrene (g) | 1400 | 1000 | 1000 | 1000 | - | - | - | 480 |
| Termination reaction | Modifying agent | - | - | - | - | O | N | R | S |
| | Amount added (g) | - | - | - | - | 7.5 | 7.4 | 10.3 | 3.7 |
| | Methanol (g) | 2.2 | 1.3 | 2.3 | 2.3 | 4.1 | 3.3 | 5.0 | 2.2 |

EP 3 875 491 A2

[Table 5]

| | | Example 45 | Example 46 | Example 47 | Example 48 | Example 49 | Example 50 | Example 51 | Example 52 | Example 53 |
|---|---|---|---|---|---|---|---|---|---|---|
| Block copolymer | | 35 | 36 | 37 | 39 | 40 | 41 | 42 | 43 | 44 |
| First stage | Styrene (g) | 2000 | 2000 | 2000 | 2000 | 1000 | 2000 | 1000 | 1000 | 880 |
| | nBL (g) | 7.5 | 7.5 | 6.6 | 8.4 | 8.9 | 13.6 | 6.5 | 6.5 | 6.6 |
| Second stage | Butadiene (g) | 5400 | 5400 | 5400 | 5400 | 5400 | 5400 | 5400 | 5400 | 6000 |
| | Styrene (g) | 600 | 600 | 600 | 600 | 600 | 600 | 600 | 600 | 240 |
| Third stage | Styrene (g) | - | - | - | - | 1000 | - | 1000 | 1000 | 880 |
| Termination reaction | Modifying agent | N | M | M | N | K | M | K | K | K |
| | Amount added (g) | 5.5 | 4.9 | 5.3 | 5.2 | 7.9 | 23.9 | 5.1 | 5.1 | 5.3 |
| | Methanol (g) | 2.4 | 2.2 | 2.4 | 2.3 | 3.5 | 5.9 | 2.3 | 2.3 | 2.4 |

EP 3 875 491 A2

[Table 6]

| | | Example 54 | Example 55 | Example 56 | Example 57 | Example 58 | Example 59 | Example 60 | Example 61 | Example 62 |
|---|---|---|---|---|---|---|---|---|---|---|
| Block copolymer | | 45 | 46 | 47 | 48 | 49 | 50 | 51 | 54 | 55 |
| First stage | Styrene (g) | 880 | 1000 | 1000 | 2000 | 2000 | 2000 | 2000 | 1600 | 2000 |
| | Butadiene (g) | - | - | - | - | - | - | - | 1200 | - |
| | nBL (g) | 6.3 | 5.4 | 5.4 | 7.5 | 7.5 | 8.9 | 8.9 | 8.8 | 7.0 |
| Second stage | Butadiene (g) | 4800 | 5400 | 5400 | 5400 | 5400 | 5400 | 5400 | 3600 | 5700 |
| | Styrene (g) | 1440 | 600 | 600 | 600 | 600 | 600 | 600 | 1600 | 300 |
| Third stage | Styrene (g) | 880 | 1000 | 1000 | - | - | - | - | - | - |
| Termination reaction | Modifying agent | K | P | K | M | Q | L | N | K | M |
| | Amount added (g) | 4.9 | 8.8 | 6.3 | 11.5 | 7.7 | 6.8 | 8.0 | 7.0 | 12.3 |
| | Methanol (g) | 2.2 | 1.8 | 1.8 | 2.8 | 2.8 | 3.5 | 3.5 | 3.1 | 2.4 |

EP 3 875 491 A2

[Table 7]

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| Block copolymer | 1 | 2 | 3 | 4 | 5 | 6 | 7 | 8 | 9 | 10 | 11 |
| TS (% by mass) | 24.9 | 28.4 | 31.3 | 36.8 | 28.6 | 32.6 | 36.5 | 40.3 | 33.3 | 36.8 | 39.5 |
| BS (% by mass) | 19.5 | 20.2 | 20.6 | 20.1 | 24.9 | 24.9 | 24.7 | 24.8 | 30.3 | 29.4 | 30.7 |
| 5% by mass toluene solution viscosity (mPa·s) | 10.3 | 9.9 | 9.7 | 10.3 | 10.0 | 9.2 | 9.5 | 9.5 | 9.2 | 10.0 | 10.2 |
| Nitrogen content (ppm) | 310 | 370 | 360 | 380 | 350 | 350 | 380 | 390 | 320 | 320 | 320 |
| Mass proportion (% by mass) of block copolymer (C) | 100 | 100 | 100 | 100 | 100 | 100 | 100 | 100 | 100 | 100 | 100 |
| RS (% by mass) | 6.7 | 10.3 | 13.5 | 20.9 | 4.9 | 10.3 | 15.7 | 20.6 | 4.3 | 10.5 | 12.7 |
| Vinyl bond content (% by mass) | 11.3 | 11.5 | 12.8 | 12.8 | 11.2 | 12.3 | 11.9 | 11.3 | 12.6 | 12.0 | 11.6 |
| Silicon content (ppm) | - | - | - | - | - | - | - | - | - | - | - |
| tanδ peak temperature (°C) | -83.0 | -74.4 | -69.5 | -65.6 | -82.7 | -75.7 | -71.8 | -65.0 | -83.1 | -74.4 | -71.8 |
| Amino group-containing | ○ | ○ | ○ | ○ | ○ | ○ | ○ | ○ | ○ | ○ | ○ |
| Alkoxysilyl group-containing | × | × | × | × | × | × | × | × | × | × | × |

[Table 8]

| | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|
| Block copolymer | 12 | 13 | 14 | 15 | 16 | 17 | 18 | 19 | 20 | 21 | 22 |
| TS (% by mass) | 44.7 | 32.8 | 32.0 | 31.6 | 33.4 | 28.5 | 33.0 | 28.3 | 32.0 | 32.6 | 31.9 |
| BS (% by mass) | 29.5 | 24.6 | 24.5 | 25.8 | 25.0 | 19.9 | 25.4 | 19.8 | 24.8 | 24.7 | 24.6 |
| 5% by mass toluene solution viscosity (mPa·s) | 9.5 | 10.2 | 9.5 | 9.4 | 15.3 | 14.7 | 7.2 | 7.6 | 9.5 | 9.7 | 10.2 |
| Nitrogen content (ppm) | 370 | 40 | 210 | 80 | 260 | 210 | 530 | 460 | 130 | 160 | 510 |
| Mass proportion (% by mass) of block copolymer (C) | 100 | 75 | 79 | 63 | 100 | 100 | 100 | 100 | 100 | 100 | 100 |
| RS (% by mass) | 21.6 | 10.9 | 9.9 | 7.8 | 11.2 | 10.7 | 10.2 | 10.6 | 9.6 | 10.5 | 9.7 |
| Vinyl bond content (% by mass) | 11.7 | 11.2 | 11.3 | 11.1 | 11.2 | 12.0 | 12.5 | 12.4 | 12.4 | 11.2 | 11.2 |
| Silicon content (ppm) | - | 160.0 | 210.0 | - | - | - | - | - | - | - | - |
| $\tan\delta$ peak temperature (°C) | -67.7 | -76.1 | -74.4 | -74.4 | -74.8 | -76.2 | -75.4 | -74.1 | -74.0 | -74.7 | -77.8 |
| Amino group-containing | ○ | ○ | ○ | ○ | ○ | ○ | ○ | ○ | ○ | ○ | ○ |
| Alkoxysilyl group-containing | × | ○ | ○ | × | × | × | × | × | × | × | × |

[Table 9]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Block copolymer | 23 | 24 | 25 | 26 | 27 | 28 | 29 |
| TS (% by mass) | 19.1 | 40.2 | 24.4 | 43.7 | 29.4 | 32.1 | 29.2 |
| BS (% by mass) | 20.3 | 19.8 | 25.7 | 24.9 | 29.5 | 25.5 | 29.6 |
| 5% by mass toluene solution viscosity (mPa·s) | 9.3 | 9.2 | 10.0 | 9.3 | 9.8 | 9.9 | 9.7 |
| Nitrogen content (ppm) | 370 | 400 | 360 | 370 | 330 | 0 | 0 |
| Mass proportion (% by mass) of block copolymer (C) | 100 | 100 | 100 | 100 | 100 | 100 | 100 |
| RS (% by mass) | -1.5 | 25.4 | -1.7 | 25.0 | -0.1 | 8.9 | -0.6 |
| Vinyl bond content (% by mass) | 11.9 | 11.6 | 12.8 | 12.2 | 12.9 | 11.1 | 12.2 |
| Silicon content (ppm) | - | - | - | - | - | - | - |
| tanδ peak temperature (°C) | -90.4 | -60.6 | -89.9 | -61.0 | -89.2 | -75.3 | -88.5 |
| Amino group-containing | ○ | ○ | ○ | ○ | ○ | × | × |
| Alkoxysilyl group-containing | × | × | × | × | × | × | × |

[Table 10]

| | Comparative Example 8 | Comparative Example 9 | Comparative Example 10 | Comparative Example 21 | Comparative Example 22 | Comparative Example 23 | Comparative Example 24 | Comparative Example 25 |
|---|---|---|---|---|---|---|---|---|
| Block copolymer | 30 | 31 | 32 | 33 | 34 | 38 | 52 | 53 |
| TS (% by mass) | 34.6 | 33.3 | 33.4 | 33 | 32.4 | 32.3 | 39.3 | 40.5 |
| BS (% by mass) | 35.0 | 24.9 | 24.2 | 24.1 | 24.5 | 24.8 | 22.6 | 15.2 |
| 5% by mass toluene solution viscosity (mPa·s) | 10.0 | 35.2 | 9.4 | 9.2 | 9.8 | 41.5 | 7.3 | 37.2 |
| Nitrogen content (ppm) | 0 | 0 | 0 | 6 | 0 | 110 | 0 | 0 |
| Mass proportion (% by mass) of block copolymer (C) | 100 | 100 | 100 | 100 | 100 | 70 | 73 | 68 |
| RS (% by mass) | -0.6 | 11.2 | 12.1 | 11.7 | 10.5 | 10.0 | 20.8 | 29.4 |
| Vinyl bond content (% by mass) | 11.9 | 12.0 | 34.3 | 11.6 | 11.8 | 12.1 | 16.1 | 14.6 |
| Silicon content (ppm) | - | - | - | - | - | - | - | 50 |
| tan$\delta$ peak temperature (°C) | -87.6 | -67.3 | -77.6 | -78.3 | -76.6 | -77.9 | -62.8 | -60.9 |
| Amino group-containing | × | × | × | × | × | ○ | × | × |
| Alkoxysilyl group-containing | × | × | × | × | ○ | × | × | ○ |

EP 3 875 491 A2

[Table 11]

| | Example 45 | Example 46 | Example 47 | Example 48 | Example 49 | Example 50 | Example 51 | Example 52 | Example 53 |
|---|---|---|---|---|---|---|---|---|---|
| Block copolymer | 35 | 36 | 37 | 39 | 40 | 41 | 42 | 43 | 44 |
| TS (% by mass) | 32.9 | 32.6 | 31.6 | 32.9 | 33.0 | 32.4 | 32.9 | 32.2 | 25.3 |
| BS (% by mass) | 25.6 | 24.7 | 24.3 | 24.4 | 25.1 | 25.0 | 24.8 | 24.3 | 22.7 |
| 5% by mass toluene solution viscosity (mPa·s) | 36.9 | 22.0 | 32.2 | 28.4 | 6.1 | 6.4 | 9.8 | 9.6 | 10.3 |
| Nitrogen content (ppm) | 120 | 150 | 130 | 140 | 600 | 330 | 350 | 350 | 330 |
| Mass proportion (% by mass) of block copolymer (C) | 68 | 81 | 78 | 67 | 100 | 82 | 100 | 100 | 100 |
| RS (% by mass) | 9.8 | 10.5 | 9.6 | 11.2 | 10.5 | 9.9 | 10.8 | 10.4 | 3.4 |
| Vinyl bond content (% by mass) | 12.1 | 12.2 | 12.7 | 11.1 | 11.8 | 12.2 | 7.0 | 19.9 | 13.0 |
| Silicon content (ppm) | - | 140 | 130 | - | - | 320 | - | - | - |
| tan$\delta$ peak temperature (°C) | -77.1 | -74.7 | -75.3 | -77.0 | -76.8 | -74.5 | -80.1 | -70.6 | -85.8 |
| Amino group-containing | ○ | ○ | ○ | ○ | ○ | ○ | ○ | ○ | ○ |
| Alkoxysilyl group-containing | × | ○ | ○ | × | × | ○ | × | × | × |

EP 3 875 491 A2

[Table 12]

| | Example 54 | Example 55 | Example 56 | Example 57 | Example 58 | Example 59 | Example 60 | Example 61 | Example 62 |
|---|---|---|---|---|---|---|---|---|---|
| Block copolymer | 45 | 46 | 47 | 48 | 49 | 50 | 51 | 54 | 55 |
| TS (% by mass) | 39.1 | 31.8 | 32.7 | 31.5 | 32.0 | 33.2 | 31.7 | 39.4 | 29.7 |
| BS (% by mass) | 21.8 | 25.7 | 25.5 | 24.8 | 24.2 | 25.2 | 24.5 | 32.3 | 26.3 |
| 5% by mass toluene solution viscosity (mPa·s) | 10.1 | 20.0 | 19.5 | 20.4 | 20.3 | 19.7 | 20.0 | 5.4 | 25.2 |
| Nitrogen content (ppm) | 370 | 90 | 200 | 130 | 60 | 40 | 80 | 340 | 120 |
| Mass proportion (% by mass) of block copolymer (C) | 100 | 100 | 100 | 86 | 84 | 73 | 77 | 100 | 79 |
| RS (% by mass) | 22.1 | 8.2 | 9.7 | 8.9 | 10.3 | 10.7 | 9.5 | 10.5 | 4.6 |
| Vinyl bond content (% by mass) | 17.9 | 11.0 | 12.1 | 10.7 | 12.2 | 11.8 | 11.9 | 12.4 | 12.5 |
| Silicon content (ppm) | - | 190 | - | 130 | - | 150 | - | - | 130 |
| tanδ peak temperature (°C) | -59.2 | -75.3 | -77.7 | -77.4 | -75.9 | -75.6 | -75.5 | -80.2 | -81.8 |
| Amino group-containing | ○ | ○ | ○ | ○ | ○ | ○ | ○ | ○ | ○ |
| Alkoxysilyl group-containing | × | ○ | × | ○ | × | ○ | × | × | ○ |

EP 3 875 491 A2

[Examples 23 to 44 and 63 to 80] and [Comparative Examples 11 to 20 and 26 to 30]

<Preparation of asphalt compositions]

350 g of an asphalt (Straight Asphalt 80-100 (manufactured by Petroliam Nasional Berhad)) was placed in a 750-mL metal can, and the metal can was sufficiently immersed in an oil bath at 180°C.
Next, each block copolymer was placed little by little in the asphalt in a molten state at the proportions shown in Table 13, Table 14, Table 15, Table 16, Table 17, and Table 18.
After each material was completely placed, asphalt compositions were prepared by stirring at a rotation speed of 3000 rpm for 60 minutes.
These blending compositions and evaluation results of each asphalt composition measured by the measurement method described later are shown in Table 13, Table 14, Table 15, Table 16, Table 17, and Table 18.

[Table 13]

| | | Example 23 | Example 24 | Example 25 | Example 26 | Example 27 | Example 28 | Example 29 | Example 30 | Example 31 | Example 32 | Example 33 |
|---|---|---|---|---|---|---|---|---|---|---|---|---|
| Block copolymer | | 1 | 2 | 3 | 4 | 5 | 6 | 7 | 8 | 9 | 10 | 11 |
| Block copolymer (parts by mass) | | 4 | 4 | 4 | 4 | 4 | 4 | 4 | 4 | 4 | 4 | 4 |
| Asphalt 80-100 (parts by mass) | | 96 | 96 | 96 | 96 | 96 | 96 | 96 | 96 | 96 | 96 | 96 |
| Evaluation of asphalt composition | Softening point (°C) | △ | ○ | ◎ | ○ | ○ | ○ | ○ | △ | ○ | ◎ | △ |
| | Elongation recovery (%) | ○ | ◎ | ◎ | ○ | ◎ | ◎ | ○ | ○ | ○ | ◎ | △ |
| | Elongation (cm) | ◎ | ○ | ○ | △ | ○ | ◎ | ○ | △ | △ | ○ | △ |
| | Compatibility | ◎ | ◎ | ◎ | ○ | ◎ | ○ | ○ | △ | ◎ | ○ | △ |
| | Heat resistance stability | ◎ | ○ | ○ | ○ | ◎ | ○ | ◎ | ◎ | ○ | ◎ | ◎ |
| | Swelling rate (%) | ◎ | ◎ | ◎ | ○ | ◎ | ◎ | △ | △ | ○ | ○ | △ |
| | Softening point maintenance rate | ○ | ○ | ○ | ○ | △ | △ | △ | △ | △ | △ | △ |
| Evaluation of modified asphalt mixture | Dynamic stability (times/mm) | △ | ○ | ◎ | ◎ | ○ | ○ | ◎ | ◎ | ◎ | ◎ | ○ |

[Table 14]

| | | Example 34 | Example 35 | Example 36 | Example 37 | Example 38 | Example 39 | Example 40 | Example 41 | Example 42 | Example 43 | Example 44 |
|---|---|---|---|---|---|---|---|---|---|---|---|---|
| Block copolymer | | 12 | 13 | 14 | 15 | 16 | 17 | 18 | 19 | 20 | 21 | 22 |
| Block copolymer (parts by mass) | | 4 | 4 | 4 | 4 | 4 | 4 | 4 | 4 | 4 | 4 | 4 |
| Asphalt 80-100 (parts by mass) | | 96 | 96 | 96 | 96 | 96 | 96 | 96 | 96 | 96 | 96 | 96 |
| Evaluation of asphalt composition | Softening point (°C) | △ | ◎ | ○ | ○ | ◎ | ○ | ○ | ○ | ○ | ○ | ○ |
| | Elongation recovery (%) | △ | ◎ | ◎ | ◎ | ○ | ◎ | △ | ○ | ◎ | ◎ | ◎ |
| | Elongation (cm) | △ | ○ | ◎ | ○ | ○ | ○ | ○ | ○ | ◎ | ◎ | ○ |
| | Compatibility | △ | ○ | ◎ | ◎ | △ | △ | ◎ | ◎ | ○ | ○ | ○ |
| | Heat resistance stability | ○ | ◎ | ○ | ◎ | △ | ○ | ○ | △ | ◎ | ◎ | ◎ |
| | Swelling rate (%) | △ | △ | ○ | ○ | ○ | ○ | ○ | ○ | ○ | ○ | ◎ |
| | Softening point maintenance rate | △ | △ | △ | △ | △ | ○ | △ | ○ | △ | △ | △ |
| Evaluation of modified asphalt mixture | Dynamic stability (times/mm) | △ | ○ | ○ | ◎ | ◎ | ◎ | △ | △ | △ | ◎ | ◎ |

[Table 15]

| | | Comparative Example 11 | Comparative Example 12 | Comparative Example 13 | Comparative Example 14 | Comparative Example 15 | Comparative Example 16 | Comparative Example 17 |
|---|---|---|---|---|---|---|---|---|
| Block copolymer | | 23 | 24 | 25 | 26 | 27 | 28 | 29 |
| Block copolymer (parts by mass) | | 4 | 4 | 4 | 4 | 4 | 4 | 4 |
| Asphalt 80-100 (parts by mass) | | 96 | 96 | 96 | 96 | 96 | 96 | 96 |
| Evaluation of asphalt composition | Softening point (°C) | × | Δ | × | Δ | Δ | ◎ | Δ |
| | Elongation recovery (%) | ○ | × | Δ | Δ | × | ◎ | Δ |
| | Elongation (cm) | ◎ | Δ | ○ | Δ | Δ | ◎ | Δ |
| | Compatibility | ◎ | × | ◎ | × | ◎ | Δ | ◎ |
| | Heat resistance stability | ◎ | ◎ | ◎ | ◎ | ◎ | ◎ | ◎ |
| | Swelling rate (%) | ◎ | Δ | ○ | Δ | ◎ | ◎ | ○ |
| | Softening point maintenance rate | Δ | Δ | Δ | Δ | Δ | Δ | Δ |
| Evaluation of modified asphalt mixture | Dynamic stability (times/mm) | ○ | ○ | ◎ | Δ | ○ | × | × |

EP 3 875 491 A2

41

[Table 16]

| | | Comparative Example 18 | Comparative Example 19 | Comparative Example 20 | Comparative Example 26 | Comparative Example 27 | Comparative Example 28 | Comparative Example 29 | Comparative Example 30 |
|---|---|---|---|---|---|---|---|---|---|
| Block copolymer | | 30 | 31 | 32 | 33 | 34 | 38 | 52 | 53 |
| Block copolymer (parts by mass) | | 4 | 4 | 4 | 4 | 4 | 4 | 4 | 4 |
| Asphalt 80-100 (parts by mass) | | 96 | 96 | 96 | 96 | 96 | 96 | 96 | 96 |
| Evaluation of asphalt composition | Softening point (°C) | △ | ○ | ○ | ◎ | ○ | ◎ | △ | ◎ |
| | Elongation recovery (%) | × | △ | ○ | ◎ | ◎ | ◎ | ○ | ○ |
| | Elongation (cm) | × | △ | ◎ | ◎ | ○ | ○ | ○ | ○ |
| | Compatibility | ○ | × | × | △ | △ | × | ◎ | × |
| | Heat resistance stability | ◎ | △ | × | ◎ | ◎ | ◎ | △ | ○ |
| | Swelling rate (%) | × | ○ | △ | ◎ | ○ | ○ | △ | △ |
| | Softening point maintenance rate | × | ○ | △ | △ | △ | ◎ | △ | △ |
| Evaluation of modified asphalt mixture | Dynamic stability (times/mm) | ○ | ◎ | ◎ | × | × | ○ | × | △ |

42

EP 3 875 491 A2

[Table 17]

| | | Example 63 | Example 64 | Example 65 | Example 66 | Example 67 | Example 68 | Example 69 | Example 70 | Example 71 |
|---|---|---|---|---|---|---|---|---|---|---|
| Block copolymer | | 35 | 36 | 37 | 39 | 40 | 41 | 42 | 43 | 44 |
| Block copolymer (parts by mass) | | 4 | 4 | 4 | 4 | 4 | 4 | 4 | 4 | 4 |
| Asphalt 80-100 (parts by mass) | | 96 | 96 | 96 | 96 | 96 | 96 | 96 | 96 | 96 |
| Evaluation of asphalt composition | Softening point (°C) | ◎ | ○ | ◎ | ◎ | Δ | ○ | ○ | ○ | Δ |
| | Elongation recovery (%) | ◎ | ◎ | ◎ | ◎ | ○ | ○ | ◎ | ○ | ○ |
| | Elongation (cm) | ○ | ◎ | ◎ | ○ | ○ | ◎ | ○ | ◎ | ○ |
| | Compatibility | Δ | ○ | ○ | ○ | ○ | ◎ | ○ | Δ | ◎ |
| | Heat resistance stability | ◎ | ○ | ○ | ◎ | ◎ | ○ | ◎ | Δ | ◎ |
| | Swelling rate (%) | ○ | ○ | ○ | ○ | ◎ | ○ | ◎ | ○ | ○ |
| | Softening point maintenance rate | ○ | ○ | ○ | ○ | Δ | Δ | Δ | Δ | Δ |
| Evaluation of modified asphalt mixture | Dynamic stability (times/mm) | ◎◎ | ◎ | ◎◎ | ◎ | ○ | ◎ | ○ | ◎ | Δ |

[Table 18]

| | | Example 72 | Example 73 | Example 74 | Example 75 | Example 76 | Example 77 | Example 78 | Example 79 | Example 80 |
|---|---|---|---|---|---|---|---|---|---|---|
| Block copolymer | | 45 | 46 | 47 | 48 | 49 | 50 | 51 | 54 | 55 |
| Block copolymer (parts by mass) | | 4 | 4 | 4 | 4 | 4 | 4 | 4 | 4 | 4 |
| Asphalt 80-100 (parts by mass) | | 96 | 96 | 96 | 96 | 96 | 96 | 96 | 96 | 96 |
| Evaluation of asphalt composition | Softening point (°C) | ○ | ◎ | ○ | ◎ | ◎ | ◎ | ◎ | ○ | ◎ |
| | Elongation recovery (%) | ○ | ◎ | ◎ | ◎ | ◎ | ◎ | ◎ | △ | ◎ |
| | Elongation (cm) | △ | ◎ | ◎ | ◎ | ◎ | ◎ | ◎ | △ | ◎ |
| | Compatibility | △ | ○ | ○ | ◎ | ◎ | ◎ | ◎ | ○ | ◎ |
| | Heat resistance stability | ○ | ○ | ◎ | ○ | ◎ | ◎ | ○ | ○ | ◎ |
| | Swelling rate (%) | ○ | ○ | ○ | ○ | ○ | ○ | ○ | △ | ○ |
| | Softening point maintenance rate | △ | ○ | ○ | ◎ | ○ | ◎ | ◎ | ○ | ○ |
| Evaluation of modified asphalt mixture | Dynamic stability (times/mm) | ○ | ◎ | ◎ | ◎◎ | ◎ | ◎◎ | ◎ | △ | ◎◎ |

EP 3 875 491 A2

44

<Preparation of modified asphalt mixture]

94.3 parts by mass of a crushed stone mastic asphalt type aggregate having a particle size shown in Table 19 below was placed in a mixing machine having a capacity of 27 liters equipped with a heating apparatus, and dry mixed for 25 seconds.

Next, 5.7 parts by mass of each of the asphalt compositions prepared using the respective block copolymers of Examples 1 to 22 and 45 to 62 and Comparative Examples 1 to 10 and 21 to 25 produced by the above method with the respective compositions shown in Tables 13 to 18 was placed in the above mixing machine and finally mixed for 50 seconds to obtain a modified asphalt mixture.

The modified asphalt mixture obtained was a crushed stone mastic asphalt type asphalt mixture.

The total amount of the modified asphalt mixture was adjusted to 10 kg, and the mixing temperature was adjusted to 177°C for both dry mixing and final mixing.

The aggregates used were No. 6 and No. 7 crushed stones from Miyama-cho, Hachioji-shi, Tokyo, crushed sand produced from Ogura, Midori-ku, Sagamihara-shi, Kanagawa, fine sand produced from Daiei-machi, Narita-shi, Chiba, and a mixture of stone powders produced from Oaza Kaminaguri, Hanno-shi, Saitama.

The particle size distribution of the aggregates used in the modified asphalt mixtures is shown in Table 19 below.

The obtained modified asphalt mixtures were evaluated by the measurement method described later.

Evaluation results are shown in Table 13, Table 14, Table 15, Table 16, Table 17, and Table 18.

[Table 19]

| Sieve opening (mm) | Passing mass percentage (%) |
|---|---|
| 19.0 | 100 |
| 13.2 | 97.7 |
| 4.75 | 46.6 |
| 2.36 | 34.0 |
| 0.3 | 18.7 |
| 0.075 | 9.5 |

[Evaluation method]

The evaluation of the asphalt compositions was carried out as follows.

(Compatibility of asphalt compositions)

The compatibility (also referred to as storage stability) of the asphalt compositions was measured according to ASTM-D5796.

A Teflon (registered trademark) tube having a diameter of 2 cm and a length of 15 cm was filled with a sample, covered with a lid of aluminum foil, and then allowed to stand in an oven at 163°C for 48 hours. After that, the tube was allowed to stand overnight in a freezer, the sample was taken out from the Teflon (registered trademark) tube, divided into three equal parts, and the softening points at the top and the bottom were measured.

A smaller difference between the measured values indicates better compatibility.

The method for measuring the softening point will be described later.

The evaluation criteria are as follows.

If the difference between the measured values is 5°C or less (Δ or higher), the asphalt composition can be used without any problem in practical use.

⊚ : The difference between the measured values is 1°C or less

○ : The difference between the measured values is more than 1°C and 3°C or less

Δ : The difference between the measured values is more than 3°C and 5°C or less

✕: The difference between the measured values is more than 5°C

(Softening point maintenance rate of asphalt composition)

The asphalt composition produced above was used as a test body and allowed to stand in a gear oven set at 180°C for 2 days.

The softening points before and after standing in the gear oven were measured, and the proportion of change therein (softening point after standing in the gear oven / softening point before standing in the gear oven) was determined.

A smaller change width of the softening point indicates less maintenance of the dispersibility of the asphalt and the block copolymer and less cleavage of molecules due to thermal degradation (decrease in the softening point), and better heat resistance. If the measured value (proportion of change) is 0.70 or more and less than 0.85, or more than 1.15 and 1.25 or less ($\Delta$ or higher), the asphalt composition can be used without any problem in practical use.

◎ : The proportion of change is 0.95 or more and 1.05 or less

○ : The proportion of change is 0.85 or more and less than 0.95, or more than 1.05 and 1.15 or less

$\Delta$ : The proportion of change is 0.70 or more and less than 0.85, or more than 1.15 and 1.25 or less

✕: The proportion of change is less than 0.7, or more than 1.25

(Softening point of asphalt composition (ring & ball method))

The softening point of the asphalt composition was measured according to JIS-K2207.

When a specified ring was filled with a sample, supported horizontally in a glycerin solution, a 3.5-g ball was placed in the center of the sample, and the liquid temperature was raised at a rate of 5°C/min, the temperature when the sample touched the bottom plate of the ring stage under the weight of the ball was measured.

The evaluation criteria are as follows.

If the measured value is 70°C or more (○ or higher), the asphalt composition can be used without any problem in practical use.

◎ : The temperature is 80°C or more

○ : The temperature is 70°C or more and less than 80°C

$\Delta$ : The temperature is 60°C or more and less than 70°C

◎ : The temperature is less than 60°C

(Heat resistance stability of asphalt composition during storage (heat aging resistance))

The asphalt composition produced above was used as a test body and allowed to stand in a gear oven set at 180°C for 7 days.

The Brookfield-type melt viscosity at 160°C before and after standing in the gear oven was measured, and the proportion of change therein (160°C melt viscosity after standing in the gear oven / 160°C melt viscosity before standing in the gear oven) was determined.

A smaller change width of the Brookfield-type melt viscosity indicates less cleavage of molecules (decrease in viscosity) due to thermal degradation and less gelation (increase in viscosity), and better heat resistance.

If the measured value (proportion of change) is 0.7 or more and less than 0.8, or more than 1.4 and 1.5 or less ($\Delta$ or higher), the asphalt composition can be used without any problem in practical use.

◎ : The proportion of change is 0.9 or more and 1.3 or less

○ : The proportion of change is 0.8 or more and less than 0.9, or more than 1.3 and 1.4 or less

$\Delta$ : The proportion of change is 0.7 or more and less than 0.8, or more than 1.4 and 1.5 or less

✕: The proportion of change is less than 0.7, or more than 1.5

(Elongation recovery (elastic recovery) of asphalt composition)

The measurement was carried out according to the method described in British Standards, BS EN 13398: 2010 / BS 2000-516: 2010.

The modified asphalt composition prepared by the above method was poured into a jig to prepare a dumbbell-shaped specimen having grips at both ends. The dimensions of the specimen excluding the grips at both ends were 1 cm in thickness, 1 cm in width, and 3 cm in length. The grips of the specimen were set on the chucks of the tensile tester, the specimen was pulled at a rate of 5 cm/min from the state where the distance between the chucks was 3 cm in a water tank at 25°C, and stopped when elongated 20 cm from the initial length. The specimen was allowed to stand in the water tank at 25°C for 10 seconds with the specimen sandwiched between the chucks, and then the specimen was cut at the center. After that, the cut specimens were left in the water tank at 25°C for 30 minutes, the sum $\alpha$ (cm) of the lengths of the portions excluding the grips of both specimens was measured, and the proportion calculated by the following formula (VI) was defined as elongation recovery (%).

$$\text{Elongation recovery (\%)} = \{3\,(cm) + 20\,(cm) - \alpha\,(cm)/20\,(cm)\}$$

$$\times\ 100\ \dots\ (VI)$$

Higher elongation recovery indicates better crack resistance.
◎ : The elongation recovery is 90% or more
○ : The elongation recovery is 80% or more and less than 90%
△ : The elongation recovery is 70% or more and less than 80%
× : The elongation recovery is less than 70%

(Elongation of asphalt composition)

According to JIS-K2207, when a sample was poured into a shape frame, shaped into a specified shape, then kept at 15°C in a constant temperature water bath, and next pulled at a speed of 5 cm/min, the distance (elongation) at the point where the sample was elongated to be cut was measured. It was considered that when the elongation was higher, the asphalt composition has better low temperature crack resistance.
◎ : The elongation is 20 cm or more
○ : The elongation is 15 cm or more and less than 20 cm
△ : The elongation is 10 cm or more and less than 15 cm
× : The elongation is less than 10 cm

(Measurement of area proportion of block copolymer rich phase and calculation of swelling rate S)

A slide glass on which the asphalt composition cut out into a 1 mm square was placed was disposed on a hot plate at 180°C, and after 10 seconds, the asphalt composition was covered with a cover glass from above to form the asphalt composition into a thin film, and this thin film was used as an observation sample.
The observation sample was observed in transmission using an optical microscope (DM4000 manufactured by Leica) with an objective lens × 100, and a digital image was obtained using a digital microscope (VHX2000 manufactured by KEYENCE Corporation).
The digital image was subjected to binarization processing with the extraction method set to brightness, and the light-colored portion was measured as the area of the block copolymer rich phase and the dark-colored portion was measured as the area of the asphalt rich phase.
The swelling ratio S of the block copolymer was calculated by the following formula (III) with the area proportion F of the block copolymer rich phase relative to the mass proportion E of the block copolymer.

$$\text{Block copolymer swelling rate S = F (\%)/E (\% by mass)}$$

$$(III)$$

The swelling rate S was evaluated according to the following criteria.
◎ : The swelling rate is 6 or more
○ : The swelling rate is 5 or more and less than 6
△ : The swelling rate is 4 or more and less than 5
× : The swelling rate is less than 4

(Dynamic stability (DS) of modified asphalt mixture)

The dynamic stability (DS) was measured by a wheel tracking test using the modified asphalt mixture prepared above.
The wheel tracking test was carried out according to Test Method Handbook B003.
A small rubber wheel loaded on a test body having predetermined dimensions is repeatedly reciprocated at a specified temperature, for a specified time, and at a specified rate, and the dynamic stability (DS) (times/mm) was determined from the amount of deformation per unit time.
Higher dynamic stability indicates that better rutting resistance can be given. The evaluation criteria are as follows.
◎◎ : 1500 times/mm or more

◎ : 1200 times/mm or more and less than 1500 times/mm
○ : 1000 times/mm or more and less than 1200 times/mm
Δ : 800 times/mm or more and less than 1000 times/mm
× : less than 800 times/mm

[Industrial Applicability]

The block copolymer of the present invention has industrial applicability as a modifier for an asphalt composition in applications such as road pavement, a waterproofing sheet, or roofing and can be particularly suitably used in the field of road pavement.

**Claims**

1. A block copolymer (P) comprising:

   a polymer block (a) mainly comprising a vinyl aromatic monomer unit; and
   a polymer block (b) comprising a conjugated diene monomer unit and a vinyl aromatic monomer unit,
   wherein the block copolymer (P) has the following characteristics (1) to (6):

   (1) a mass proportion (TS) of the vinyl aromatic monomer unit is 20% by mass or more and 45% by mass or less;
   (2) a mass proportion (BS) of the polymer block (a) calculated by the following formula (I) is 15% by mass or more and 35% by mass or less

$$\text{Mass proportion (BS) (\% by mass) of polymer block (a)} = (\text{mass of polymer block (a) component} / \text{mass of block copolymer (P)}) \times 100 \quad (I);$$

   (3) a 5% by mass toluene solution viscosity is 5 mPa·s or more and 40 mPa·s or less;
   (4) a nitrogen content is 20 ppm or more and 1000 ppm or less;
   (5) the block copolymer (P) comprises a block copolymer (C) having a structure having two or more of the polymer block (a), and a mass proportion of the block copolymer (C) is 50% by mass or more and 100% by mass or less;
   (6) a mass proportion (RS) of the vinyl aromatic monomer unit in the polymer block (b) calculated by the following formula (II) is 3% by mass or more and 23% by mass or less

$$RS = (TS - BS)/(100 - BS) \times 100 \ \ldots \ (II).$$

2. The block copolymer (P) according to claim 1, wherein the 5% by mass toluene solution viscosity is 5 mPa·s or more and 30 mPa·s or less.

3. The block copolymer (P) according to claim 1 or 2, wherein a silicon content is 50 ppm or more and 300 ppm or less.

4. The block copolymer (P) according to any one of claims 1 to 3, wherein a vinyl bond content derived from the conjugated diene monomer is 5% by mass or more and 15% by mass or less.

5. The block copolymer (P) according to any one of claims 1 to 4, wherein the block copolymer (P) comprises a block copolymer (C) having a structure having two or more of the polymer block (a), and a mass proportion of the block copolymer (C) is 50% by mass or more and 90% by mass or less.

6. The block copolymer (P) according to any one of claims 1 to 5, wherein a peak waveform obtained by GPC measurement of the block copolymer (P) has two or more peaks, and has a peak in a polystyrene-equivalent peak molecular weight of 130,000 or less.

7. The block copolymer (P) according to any one of claims 1 to 6, wherein a loss tangent (tanδ) peak temperature is -85°C or more and -60°C or less.

8. The block copolymer (P) according to any one of claims 1 to 7, wherein the block copolymer (P) has an amino group and/or an alkoxysilyl group.

9. An asphalt composition comprising:

0.5 parts by mass or more and 30 parts by mass or less of the block copolymer (P) according to any one of claims 1 to 8; and
100 parts by mass of an asphalt.

10. The asphalt composition according to claim 9, wherein a swelling rate S of the block copolymer (P) in the asphalt composition calculated by the following formula (III) is 4 or more:

```
block copolymer swelling rate (S) = F (%)/E (% by

mass) ... (III)
```

wherein E represents a mass proportion of the block copolymer (P), and F represents an area proportion of a block copolymer (P) rich phase.

11. A modified asphalt mixture comprising:

3 parts by mass or more and 15 parts by mass or less of the asphalt composition according to claim 9 or 10; and
100 parts by mass of an aggregate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9012898 A
- JP 9302234 A
- JP 2004059781 A
- JP 2006160886 A
- JP 3619286 B
- JP 4317979 B
- JP 46032415 A

- JP 49036957 A
- JP 48002423 A
- JP 48004106 A
- JP 56028925 A
- JP 59166518 A
- JP 60186577 A

**Non-patent literature cited in the description**

- **I.M. KOLTHOFF.** *J. Polym. Sci.,* 1946, vol. 1, 429

- **I. M. KOLTHOFF et al.** *J. Polym. Sci.,* 1946, vol. 1, 429